# EUROPEAN PATENT APPLICATION

(11) **EP 4 694 413 A1**
(43) Date of publication of application: **11.02.2026**
(21) Application number: 23929375.6
(22) Date of filing: 31.03.2023
(51) Int. Cl.: H04W 64/00, H04W 8/24

(54) **COMMUNICATION METHOD, APPARATUS, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Zimmermann, Tankred Klaus
(86) International application number: PCT/CN2023/085373
(87) International publication number: WO 2024/197783

(57) **Abstract**

The present disclosure relates to the technical field of wireless communications, and in particular to a communication method, an apparatus, and a readable storage medium. The method comprises: sending first information, the first information being used for indicating whether a terminal supports a first capability, and the first capability being the capability of performing positioning measurement on multiple carriers while communicating with a network device on the multiple carriers. In embodiments of the present disclosure, a terminal can send first information to report whether the terminal supports a first capability, so that according to different capabilities of the terminal, when there is a time conflict between communication and positioning measurement on multiple carriers, processing adapted to the capability of the terminal can be performed, thereby effectively solving the problem of time conflicts between different operations.

## Description

### TECHNICAL FIELD

The disclosure relates to the field of wireless communication technologies, and in particular to a communication method, a related device, and a readable storage medium.

### BACKGROUND

The Positioning Reference Signal (PRS) was introduced in Release 16 (R16) of the 3rd Generation Partnership Project (3GPP). The PRS may be used for positioning measurement. In the positioning measurement of New Radio (NR), user equipment (UE) supports measuring PRS on a single carrier. In order to improve the positioning accuracy, multi-carrier-based positioning measurement is introduced.

### SUMMARY

Embodiments of the disclosure provide communication methods, related apparatuses and a readable storage medium.

According to a first aspect of embodiments of the disclosure, a communication method is provided. The method is performed by a terminal and includes:

sending first information, in which the first information is configured to indicate whether the terminal supports a first capability, and the first capability is a capability of performing a positioning measurement on a plurality of carriers while performing communication with a network device on a plurality of carriers.

According to a second aspect of embodiments of the disclosure, a communication method is provided. The method is performed by a network device and includes:

receiving first information, in which the first information is configured to indicate whether a terminal supports a first capability, and the first capability is a capability of performing a positioning measurement on a plurality of carriers while performing communication with the network device on a plurality of carriers.

According to a third aspect of embodiments of the disclosure, a communication method is provided. The method is performed by a communication system and includes:
sending first information by a terminal to a network device, in which the first information is configured to indicate whether the terminal supports a first capability, and the first capability is a capability of performing a positioning measurement on a plurality of carriers while performing communication with the network device on a plurality of carriers; and
receiving the first information by the network device.

According to a fourth aspect of embodiments of the disclosure, a first communication device is provided. The device includes a transceiver module, and the transceiver module may be configured to support the first communication device to perform communication.

When performing steps in the first aspect above, the transceiver module is configured to send first information, the first information is configured to indicate whether the terminal supports a first capability, and the first capability is a capability of performing a positioning measurement on a plurality of carriers while performing communication with a network device on a plurality of carriers.

According to a fifth aspect of embodiments of the disclosure, a second communication device is provided. The device may include a transceiver module, and the transceiver module may be configured to support the second communication device to perform communication.

When performing steps in the second aspect above, the transceiver module is configured to receive first information, in which the first information is configured to indicate whether a terminal supports a first capability, and the first capability is a capability of performing a positioning measurement on a plurality of carriers while performing communication with a network device on a plurality of carriers.

According to a sixth aspect of embodiments of the disclosure, a communication device is provided. The communication device includes one or more processors, and
a memory,
in which the memory is configured to store a computer program, and
the processor is configured to execute the computer program to implement the method of the first aspect, the second aspect or the third aspect.

According to a seventh aspect of embodiments of the disclosure, a communication system is provided. The communication system includes a terminal and a network device, in which
the terminal is configured to implement the method of the first aspect; and
the network device is configured to implement the method of the second aspect.

According to an eighth aspect of embodiments of the disclosure, a computer-readable storage medium is provided. The computer-readable storage medium has instructions stored thereon. When the instructions are called and executed on a computer, the computer is caused to perform the method of the first aspect, the second aspect, or the third aspect.

It is to be understood that the foregoing general description and the following detailed description are illustrative and explanatory only and are not restrictive of the disclosure.

### BRIEF DESCRIPTION OF THE DRAWINGS

In order to more clearly illustrate the technical solutions in the embodiments of the disclosure, the drawings required for describing the embodiments are introduced below. The following drawings are only some embodiments of the disclosure and do not impose specific limitations on the protection scope of the disclosure.
FIG. 1 is a schematic diagram illustrating an architecture of a communication system according to an embodiment of the disclosure.
FIG. 2A is a schematic diagram illustrating interactions of a communication method according to an embodiment of the disclosure.
FIG. 2B is a schematic diagram illustrating interactions of a communication method according to an embodiment of the disclosure.
FIG. 3A is a schematic flowchart illustrating a communication method performed by a terminal according to an embodiment of the disclosure.
FIG. 3B is a schematic flowchart illustrating a communication method performed by a terminal according to an embodiment of the disclosure.
FIG. 3C is a schematic flowchart illustrating a communication method performed by a terminal according to an embodiment of the disclosure.
FIG. 3D is a schematic flowchart illustrating a communication method performed by a terminal according to an embodiment of the disclosure.
FIG. 3E is a schematic flowchart illustrating a communication method performed by a terminal according to an embodiment of the disclosure.
FIG. 4A is a schematic flowchart illustrating a communication method performed by a network device according to an embodiment of the disclosure.
FIG. 4B is a schematic flowchart illustrating a communication method performed by a terminal according to an embodiment of the disclosure.
FIG. 4C is a schematic flowchart illustrating a communication method performed by a terminal according to an embodiment of the disclosure.
FIG. 4D is a schematic flowchart illustrating a communication method performed by a terminal according to an embodiment of the disclosure.
FIG. 4E is a schematic flowchart illustrating a communication method performed by a terminal according to an embodiment of the disclosure.
FIG. 5 is a schematic flowchart illustrating a communication method performed by a communication system according to an embodiment of the disclosure.
FIG. 6 is a schematic diagram illustrating a communication method according to an embodiment of the disclosure.
FIG. 7A is a schematic diagram illustrating a first communication device according to an embodiment of the disclosure.
FIG. 7B is a schematic diagram illustrating a second communication device according to an embodiment of the disclosure.
FIG. 8A is a schematic diagram illustrating a communication device according to an embodiment of the disclosure.
FIG. 8B is a schematic diagram illustrating a communication device according to an embodiment of the disclosure.

### DETAILED DESCRIPTION

In a multi-carrier positioning measurement scenario, there may be a time domain conflict between the communication and the positioning measurement of a terminal on a carrier aggregation (CA) and/or dual connectivity (DC) carrier.

The embodiments of the disclosure provide communication methods, related apparatuses, and a related readable storage medium.

In a first aspect, embodiments of the disclosure provide a communication method performed by a terminal. The method includes:

sending first information, in which the first information is configured to indicate whether the terminal supports a first capability, and the first capability is a capability of performing a positioning measurement on multiple carriers while performing communication with a network device on multiple carriers.

In above embodiments, the terminal may send the first information to report whether it supports the first capability, such that based on different capabilities of the terminals, when there is a time conflict between the communication performed on multiple carriers and the positioning measurement performed on multiple carriers, processing that adapts to capability of the terminal may be performed to effectively solve the problem of the time conflict between different operations.

In conjunction with some embodiments of the first aspect, in some embodiments, the method further includes:
performing the communication based on a first set of carriers and performing the positioning measurement simultaneously based on a second set of carriers, in which the terminal supports the first capability.

In the above embodiment, in a case where the terminal supports the first capability, when there is a time conflict between the communication and the positioning measurement performed on multiple carriers, the terminal may simultaneously perform the communication and the positioning measurement on different carriers, thereby ensuring data transmission with the network device and realizing the positioning measurement.

In conjunction with some embodiments of the first aspect, in some embodiments, the method further includes:
sending second information, in which the terminal does not support the first capability, and the second information is configured to request third information; and
receiving the third information, in which third information is configured to indicate a measurement gap.

In the above embodiment, in a case where the terminal does not support the first capability, the terminal may request configurations of the measurement gap, to utilize the measurement gap to handle operations in a scenario where there is a time conflict between the communication and the positioning measurement performed on multiple carriers.

In conjunction with some embodiments of the first aspect, in some embodiments, the second information includes at least one of:
a starting offset value of the measurement gap;
a measurement gap duration;
a measurement gap period; or
a measurement gap priority.

In the above embodiment, the second information includes time-domain parameters relevant to the measurement gap, such that reporting of the time-domain parameters of the measurement gap preferred by the terminal is realized, which is beneficial for other devices, such as network devices, to adaptively configure the measurement gap in combination with preferences of different terminals.

In conjunction with some embodiments of the first aspect, in some embodiments, the method further includes:
receiving third information, in which the terminal does not support the first capability, and the third information is configured to indicate a measurement gap.

In the above embodiment, in a case where the terminal does not support the first capability, the measurement gap that is actively configured for the terminal by another device, such as a network device, may be received, such that the measurement gap may be utilized to handle operations in the scenario where there is the time conflict between the communication and the positioning measurement performed on multiple carriers.

In conjunction with some embodiments of the first aspect, in some embodiments, the third information includes at least one of:
a starting offset value of the measurement gap;
a measurement gap duration;
a measurement gap period; or
a measurement gap priority.

In the above embodiment, the third information includes time-domain parameters relevant to the measurement gap, such that the terminal may utilize the measurement gap at a reasonable time domain position.

In conjunction with some embodiments of the first aspect, in some embodiments, the method further includes:
communicating with the network device on the first set of carriers, and performing the positioning measurement based on the second of carriers in accordance with the measurement gap.

In the above embodiment, in a case where there is a time conflict between the multi-carrier communication and the positioning measurement, the terminal may perform the positioning measurement on the second set of carriers in accordance with the measurement gap, such that the communication and the positioning measurement may be implemented on different carriers respectively, thereby reducing the impact of the positioning measurement on the communication.

In conjunction with some embodiments of the first aspect, in some embodiments, the method further includes:
performing the communication and not performing the positioning measurement, in which the terminal does not support the first capability, and a time when the communication is performed based on the first set of carriers and the time when the positioning measurement is performed based on the second set of carriers,.

In the above embodiment, in a case where the terminal does not support the first capability, the terminal may give priority to the communication instead of the positioning measurement when there is a time conflict between the communication and the positioning measurement, to reduce communication interruption and ensure communication quality.

In conjunction with some embodiments of the first aspect, in some embodiments, the communication based on the first set of carriers includes at least one of:
receiving a first type of downlink information on the first set of carriers, or
sending a first type of uplink information on the first set of carriers.

In the above embodiment, the terminal performs the communication based on the first set of carriers, which is conducive to realizing data transmission and reception with another device, such as a network device, on multiple carriers over a larger transmission bandwidth, thereby ensuring system capacity.

In conjunction with some embodiments of the first aspect, in some embodiments, the first type of downlink information includes at least one of:
a physical downlink control channel (PDCCH);
a physical downlink shared channel (PDSCH);
a synchronization signal block (SSB);
a channel state information reference signal (CSI-RS); or
a tracking reference signal (TRS).

In the above embodiment, during the communication process, the terminal may receive a channel for carrying data or a reference signal for measurement, to perform corresponding operations based on the scheduling of different downlink information.

In conjunction with some embodiments of the first aspect, in some embodiments, the first type of uplink information includes at least one of:
a physical uplink control channel (PUCCH);
a physical uplink shared channel (PUSCH); or
a sounding reference signal (SRS).

In the above embodiment, during the communication process, the terminal may send information for carrying data or for reporting uplink channel quality, such that another device, such as a network device, may perform reasonable scheduling.

In conjunction with some embodiments of the first aspect, in some embodiments, performing the positioning measurement based on the second set of carriers includes at least one of:
receiving a positioning reference signal (PRS) on the second set of carriers, in which the PRS is used for the positioning measurement; or
sending a sounding reference signal (SRS) on the second set of carriers, in which the SRS is used for the positioning measurement.

In the above embodiments, the terminal may perform a downlink positioning reference signal measurement and may send an uplink positioning reference signal to implement multi-carrier positioning measurement in different ways.

In conjunction with some embodiments of the first aspect, in some embodiments, a frequency band relationship between the first set of carriers and the second set of carriers satisfies one of:
the first of carriers and the second of carriers forming intra-band carrier aggregation; or
the first of carriers and the second of carriers forming inter-band carrier aggregation.

In the above embodiment, there may be different frequency band relationships between the carriers used for the communication and the carriers used for the positioning measurement, such that the terminal may implement multi-carrier operations under different bandwidth combinations, which is beneficial to improving system capacity.

In conjunction with some embodiments of the first aspect, in some embodiments,
the first set of carriers includes carriers belonging to the same frequency band or includes carriers belonging to different frequency bands;
the second set of carriers includes carriers belonging to the same frequency band or includes carriers belonging to different frequency bands.

In the above embodiment, the first set of carriers or the second set of carriers may include a plurality of carrier combinations, thereby further expanding the bandwidth combination corresponding to the multiple carriers, which is beneficial to improving the system capacity.

In conjunction with some embodiments of the first aspect, in some embodiments,
all or part of carriers in the first set are in the same frequency band as all or part of carriers in the second set.

In the above embodiment, there are different possible frequency band combinations between the first set of carriers and the second set of carriers, thereby further expanding the bandwidth combination corresponding to the multiple carriers, which is beneficial to improving the system capacity.

In a second aspect, embodiments of the disclosure provide a communication method performed by a network device. The method includes:
receiving first information, in which the first information is configured to indicate whether the terminal supports a first capability, and the first capability is a capability of performing a positioning measurement on multiple carriers while performing communication with the network device on a plurality of carriers.

In the above embodiment, the network device receives the first information to learn whether the terminal supports the first capability, such that when there is a time conflict between the communication and the positioning measurement performed on multiple carriers, the network device may adapt to terminals with different capabilities and perform adaptive processing to effectively solve the time conflict problem between different operations.

In conjunction with some embodiments of the second aspect, in some embodiments, the method further includes:
performing the communication based on a first set of carriers and performing the positioning measurement based on a second set of carriers, in which the terminal supports the first capability.

In conjunction with some embodiments of the second aspect, in some embodiments, the method further includes:
receiving second information, in which the terminal does not support the first capability, and the second information is configured to request third information; and
sending third information, in which the third information is configured to indicate a measurement gap.

In conjunction with some embodiments of the second aspect, in some embodiments, the second information includes at least one of:
a starting offset value of the measurement gap,
a measurement gap duration,
a measurement gap period, or
a measurement gap priority.

In conjunction with some embodiments of the second aspect, in some embodiments, the method further includes:
sending third information, in which the terminal does not support the first capability, and the third information is configured to indicate a measurement gap.

In conjunction with some embodiments of the second aspect, in some embodiments, the third information includes at least one of:
a starting offset value of the measurement gap,
a measurement gap duration,
a measurement gap period, or
a measurement gap priority.

In conjunction with some embodiments of the second aspect, in some embodiments, the method further includes:
performing the communication and not performing the positioning measurement, in which the terminal does not support the first capability, and a time when the communication is performed based on the first set of carrier conflicts with a time when the positioning measurement is performed based on the second set of carriers.

In conjunction with some embodiments of the second aspect, in some embodiments, performing the communication based on the first set of carriers includes at least one of:
sending a first type of downlink information on the first set of carriers; or
receiving a first type of uplink information on the first set of carriers.

In conjunction with some embodiments of the second aspect, in some embodiments, the first type of downlink information includes at least one of:
a PDCCH,
a PDSCH,
an SSB,
a CSI-RS, or
a TRS.

In conjunction with some embodiments of the second aspect, in some embodiments, the first type of uplink information includes at least one of:
a PUCCH,
a PUSCH, or
an SRS.

In combination with some embodiments of the second aspect, in some embodiments, performing the positioning measurement based on the second set of carriers includes at least one of:
sending a PRS on the second set of carriers, in which the PRS is used for positioning measurements; and
receiving SRS on the second set of carriers, in which the SRS is used for the positioning measurement.

In conjunction with some embodiments of the second aspect, in some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In conjunction with some embodiments of the second aspect, in some embodiments,
the first set of carriers includes carriers belonging to the same frequency band or includes carriers belonging to different frequency bands;
the second set of carriers includes carriers belonging to the same frequency band or includes carriers belonging to different frequency bands.

In conjunction with some embodiments of the second aspect, in some embodiments, all or part of carriers in the first set are in the same frequency band as all or part of carriers in the second set.

In a third aspect, embodiments of the disclosure provide a communication method performed by a communication system. The method includes:
sending first information by a terminal to a network device, in which the first information is configured to indicate whether the terminal supports a first capability, the first capability is a capability of performing a positioning measurement on a plurality of carriers while performing communication with the network device on a plurality of carriers; and
receiving the first information by the network device.

In the above embodiment, the terminal sends the first information to the network device to report to the network device whether it supports the first capability, such that based on the different capabilities of the terminal, when there is a time conflict between the communication and the positioning measurement performed on multiple carriers, processing that adapts to the capability of the terminal may be performed to effectively solve the time conflict problem between different operations.

In a fourth aspect, embodiments of the disclosure provide a first communication device including a transceiver module. The transceiver module may be configured to support the communication device to perform communication. When performing steps of the first aspect, the transceiver module is configured to send first information, in which the first information is configured to indicate whether a terminal supports a first capability, and the first capability is a capability of performing the positioning measurement on a plurality of carriers while performing communication with a network device on a plurality of carriers.

In a fifth aspect, embodiments of the disclosure provide a second communication device including a transceiver module. The transceiver module may be configured to support the communication device to perform communication. When performing steps of the second aspect, the transceiver module is configured to receive first information, in which the first information is configured to indicate whether a terminal supports a first capability, and the first capability is a capability of performing a positioning measurement on a plurality of carriers while performing communication with a network device on a plurality of carriers.

In a sixth aspect, embodiments of the disclosure provide a communication device, including one or more processors; and
a memory;
in which the memory is configured to store a computer program, and
the processor is configured to execute the computer program to implement the method of the first aspect, the second aspect or the third aspect.

In a seventh aspect, embodiments of the disclosure provide a communication system, including a terminal and a network device, in which
the terminal is configured to implement the method of the first aspect, and
the network device is configured to implement the method of the second aspect.

In an eighth aspect, embodiments of the disclosure provide a computer-readable storage medium having instructions stored thereon. When the instructions are called and executed on a computer, the computer is configured to perform the method of the first aspect, the second aspect, or the third aspect.

In a ninth aspect, embodiments of the disclosure provide a program product. When the program product is executed by a communication device, the communication device is configured to perform the method of optional implementations of the first aspect, the second aspect or the third aspect.

In a tenth aspect, embodiments of the disclosure provide a computer program which, when executed on a computer, enables the computer to implement the method of optional implementations of the first aspect, the second aspect or the third aspect.

It is understandable that the first communication device, the second communication device, the communication device, the communication system, the storage medium, the program product, and the computer program are all used for executing the methods according to the embodiments of the disclosure. Therefore, for the beneficial effects that may be achieved, reference may be made to the beneficial effects in the corresponding methods, which will not be repeated here.

The embodiments of the disclosure provide communication methods and devices, and a readable storage medium. In some embodiments, the terms such as "communication method," "processing method," "information processing method," or the like may be used interchangeably with each other. Terms such as "communication device," "processing device," "information processing device" or the like may be used interchangeably with each other. Terms such as "communication system," "processing system," "information processing system" or the like may be used interchangeably with each other.

Embodiments of the disclosure are not exhaustive, but are only illustrative of some embodiments, and are not intended to be a specific limitation on the scope of protection of the disclosure. Without contradiction, each step in a certain embodiment may be implemented as an independent embodiment, and the steps may be arbitrarily combined. For example, a solution after removing some steps in a certain embodiment may also be implemented as an independent embodiment, and the order of steps in a certain embodiment may be arbitrarily exchanged. In addition, optional implementations in a certain embodiment may be arbitrarily combined. In addition, embodiments may be arbitrarily combined. For example, some or all steps of different embodiments may be arbitrarily combined, and a certain embodiment may be arbitrarily combined with optional implementations of other embodiments.

In each embodiment of the disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in embodiments of the disclosure are only for the purpose of describing specific embodiments and are not intended to limit the disclosure.

In the embodiments of the disclosure, unless otherwise specified, elements expressed in the singular form, such as "a," "an," "the," "above," "said," "aforementioned," "this," or the like, may mean "one and only one," "one or more," "at least one," or the like. For example, when using articles such as "a," "an," "the" in English translation, the noun after the article may be understood as a singular expression or a plural expression.

In the embodiments of the disclosure, "a plurality of" refers to two or more.

In some embodiments, the terms "at least one of," "one or more," "a plurality of," "multiple," or the like may be used interchangeably.

In the embodiments of the disclosure, descriptions such as "at least one of A, B, C..." or "A and/or B and/or C..." include a case where any one of A, B, C... exists alone, any combination of any multiple of A, B, C... exits, and each of A, B, C... may exist alone. For example, "at least one of A, B, C" includes the case where A exists alone, B exists alone, C exists alone, the combination of A and B, the combination of A and C, the combination of B and C, and the combination of A, B, and C. For example, "A and/or B" includes the case where A exists alone, B exists alone, and the combination of A and B.

In some embodiments, the descriptions such as "performing A in one case, and performing B in another case" or "performing A in response to one case, and performing B in response to another case" may include the following depending to the situation: performing A independently of B (that is, performing A in some embodiments), performing B independently of A (that is, performing B in some embodiments), selectively performing A and B (that is, selectively performing A and B in some embodiments), or performing both A and B (that is, performing A and B in some embodiments). When there are more branches such as A, B, C, etc., the above is also similar.

The prefixes such as "first" and "second" in the embodiments of the disclosure are only used to distinguish different description objects, and do not constitute restrictions on the position, order, priority, quantity or content of the described objects. For the statement of the described objects, reference may be made to the description in the context of claims or embodiments, and the use of prefixes should not constitute a redundant restriction. For example, in a case where the described object is a "field", adding the ordinal number before the "field", such as "first field" and "second field", does not limit the position or order between these "fields", and the terms, such as "first" and "second", do not limit whether the "fields" are in the same message, nor do they limit the order of the "first field" and the "second field". As another example, if the described object is a "level", adding the ordinal number before the "level", such as "first level" and "second level", does not limit the priority between these "levels". As another example, the number of described objects is not limited by the ordinal number and may be one or more. Taking the "first device" as an example, the number of "devices" may be one or more. In addition, the objects modified by different prefixes may be the same or different. For example, if the described object is a "device", then the "first device" and the "second device" may be the same device or different devices, and their types may be the same or different. As another example, if the described object is "information", then the "first information" and the "second information" may be the same information or different information, and their contents may be the same or different.

In some embodiments, "including A," "comprising A," "used to indicate A," and "carrying A" may be interpreted as directly carrying A or indirectly indicating A.

In some embodiments, terms such as "in response to ...," "in response to determining ...," "in the case of ...," "at the time of ...," "when ...," "if ...," "should ...," or the like may be used interchangeably.

In some embodiments, terms such as "greater than," "greater than or equal to," "not less than," "more than," "more than or equal to," "not less than," "higher than," "higher than or equal to," "not lower than," and "above" may be used interchangeably, and terms such as "less than," "less than or equal to," "not greater than," "smaller than," "smaller than or equal to," "no more than," "lower than," "lower than or equal to," "not higher than," and "below" may be used interchangeably.

In some embodiments, devices may be interpreted as physical or virtual, and their names are not limited to the names used in the embodiments. Terms such as "apparatus," "equipment," "device," "circuit," "network element," "node," "function," "unit," "section," "system," "network," "chip," "chip system," "entity," and "subject" may be used interchangeably.

In some embodiments, the terms "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group (cell)," "carrier," "component carrier," "bandwidth part (BWP)," and the like may be used interchangeably.

In some embodiments, the terms "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" and the like may be used interchangeably.

In some embodiments, the "access network device," "core network device" or "network device" may be replaced with "terminal". For example, the communication between the access network device, the core network device or the network device and the terminal may be replaced by the communication between multiple terminals (for example, it may also be referred to as device-to-device (D2D), vehicle-to-everything (V2X), or the like), or may employ various embodiments of the disclosure. In this case, it may also be set as a structure in which the terminal has all or part of the functions of the access network device. In addition, the language such as "uplink" and "downlink" may also be replaced with the language corresponding to the communication between the terminals (for example, "side"). For example, the "uplink channel" and "downlink channel" may be replaced by the "side channel". The "uplink" and "downlink" may be replaced by the "sidelink".

In some embodiments, the "terminal" may be replaced by "access network device," "core network device," or "network device". In this case, the access network device, the core network device, or the network device may also be configured to have a structure that has all or part of the functions of the terminal.

In some embodiments, the names of information are not limited to the names used in the embodiments, and terms such as "information," "message," "signal," "signaling," "report," "configuration," "indication," "instruction," "command," "channel," "parameter," "domain," "field," "symbol," "symbol/code element," "code element," "codebook," "codeword," "codepoint," "bit," "data," "program," and "chip" may be used interchangeably.

In some embodiments, terms such as "uplink," "uplink" and "physical uplink" may be used interchangeably, terms such as "downlink," "downlink" and "physical downlink" may be used interchangeably, and terms such as "side," "sidelink," "side communication," "sidelink communication," "direct connection," "direct link," "direct communication" and "direct link communication" may be used interchangeably.

In some embodiments, the terms "downlink control information (DCI)," "downlink (DL) assignment," "DL DCI," "uplink (UL) grant" and "UL DCI" may be used interchangeably.

In some embodiments, the terms "physical downlink shared channel (PDSCH)," "DL data" and the like may be used interchangeably, and the terms "physical uplink shared channel (PUSCH)," "UL data" and the like may be used interchangeably. In some embodiments, the terms "radio," "wireless," "radio access network (RAN)," "access network (AN)," "RAN-based" and the like may be used interchangeably.

In some embodiments, the terms "search space," "search space set," "search space configuration," "search space set configuration," "control resource set (CORESET)," "CORESET configuration" and the like may be used interchangeably.

In some embodiments, terms such as "synchronization signal (SS)," "synchronization signal block (SSB)," "reference signal (RS)." "pilot" and "pilot signal" may be used interchangeably.

In some embodiments, terms such as "moment," "time point," "time" and "time position" may be used interchangeably, and terms such as "duration," "period," "time window," "window" and "time" may be used interchangeably.

In some embodiments, the terms "component carrier (CC)", "cell", "frequency carrier", "carrier frequency" and the like may be used interchangeably.

In some embodiments, terms such as "resource block (RB)," "physical resource block (PRB)," "subcarrier group (SCG)," "resource element group (REG)," "PRB pair," "RB pair" and "resource element (RE)" may be used interchangeably.

In some embodiments, terms such as "wireless access scheme" and "waveform" may be used interchangeably.

In some embodiments, the terms "precoding," "precoder," "weight," "precoding weight," "quasi-co-location (QCL)," "transmission configuration indication (TCI) state," "spatial relation," "spatial domain filter," "transmission power," "phase rotation," "antenna port," "antenna port group," "layer," "the number of layers," "rank," "resource," "resource set," "resource group," "beam," "beam width," "beam angular degree," "antenna," "antenna element," "panel" and the like may be used interchangeably.

In some embodiments, the terms "frame," "radio frame," "subframe," "slot," "sub-slot," "mini-slot," "symbol," "symbol/code element," "transmission time interval (TTI)" and the like may be used interchangeably.

In some embodiments, "obtain," "acquire," "get," "receive," "transmit," "send and/or receive" may be used interchangeably, and may be interpreted as receiving from other entities, obtaining from a protocol, obtaining by self-processing, autonomously implementing, or the like.

In some embodiments, terms such as "send," "launch," "report," "issue," "transmit," and "send and/or receive" may be used interchangeably.

In some embodiments, "predetermined" or "preset" may be interpreted as being pre-specified in a protocol or may be interpreted as performing a pre-set action by a device.

In some embodiments, "determining" may be interpreted as, but is not limited to, "estimating," "deciding," "judging," "calculating," "computing," "processing," "deriving," "investigating," "searching for," "looking up," "search," "inquiry," "ascertaining," "receiving," "transmitting," "input," "output," "accessing," "resolving," "selecting," "choosing," "establishing," "comparing," "assuming", "expecting", "considering", "broadcasting," "notifying," "communicating," "forwarding," "configuring," "reconfiguring," "allocating," "mapping," or "assigning".

In some embodiments, the "judging" or "estimating" may be represented as, but is not limited to, a value (such as 0 or 1) of 1 bit, as a true value or a false value (Boolean value), or as a comparison of numerical values (for example, comparison with a predetermined value).

In some embodiments, the "network" may be interpreted as devices included in the network (e.g., access network device, core network device or the like).

In some embodiments, "not expecting to receive" may be interpreted as not receiving on time domain resources and/or frequency domain resources, or as not performing any subsequent processing on the data after receiving the data. "Not expecting to send" may be interpreted as not sending, or as sending but not expecting the recipient to respond to the sent content.

In some embodiments, the acquisition of data, information or the like may comply with the laws and regulations of the country where the data is obtained.

In some embodiments, data, information or the like may be obtained with the user's consent.

In addition, each element, each row or each column in the table of the embodiments of the disclosure may be implemented as an independent embodiment, and the combination of any elements, any rows or any columns may also be implemented as an independent embodiment.

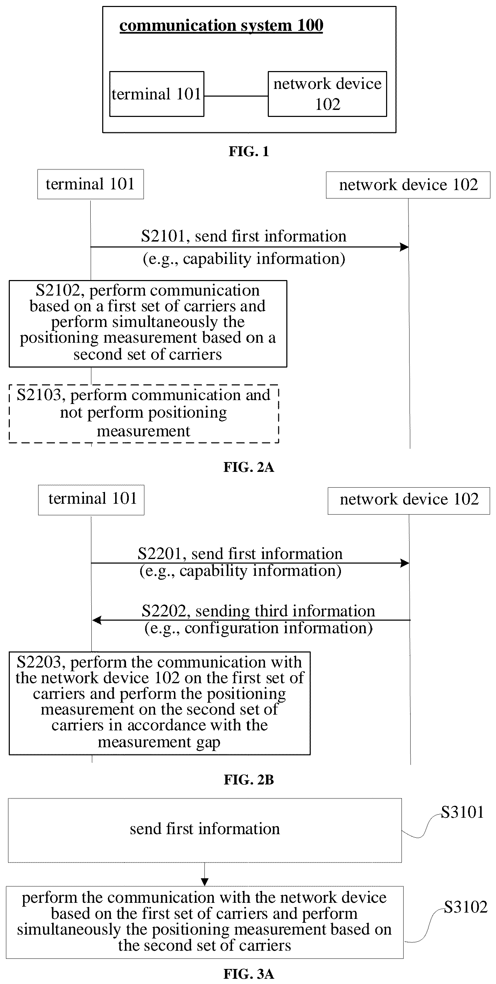

FIG. 1 is a schematic diagram illustrating an architecture of a communication system according to an embodiment of the disclosure.

As illustrated in FIG. 1, the communication system 100 includes a terminal 101 and a network device 102.

In some embodiments, the terminal 101 includes, but is not limited to, for example, at least one of a mobile phone, a wearable device, an Internet of Things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home.

In some embodiments, the network device 102 may include at least one of an access network device or a core network device.

In some embodiments, the access network device is for example, a node or device that accesses a terminal to a wireless network. The access network device may include, but is not limited to, at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system.

In some embodiments, the technical solution of the disclosure may be applicable to the Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the access network device may be composed of a central unit (CU) and distributed units (DU). The CU may also be referred to as a control unit. The CU-DU structure may be used to split the protocol layer of the access network device, with some functions of the protocol layer being centrally controlled by the CU, and the remaining part or all of the functions of the protocol layer being distributed in the DUs, and the DUs are centrally controlled by the CU. The disclosure is not limited to the above.

In some embodiments, the core network device may be a device including one or more network elements or may be a plurality of devices or a group of devices, each including all or part of one or more network elements. The network element may be virtual or physical. The core network may include, for example, at least one of an Evolved Packet Core (EPC), a 5G Core Network (5GCN), or a Next Generation Core (NGC).

It may be understood that the communication system described in the embodiments of the disclosure is for the purpose of more clearly illustrating the technical solutions of the embodiments of the disclosure, and does not constitute a limitation on the technical solutions of the embodiments of the disclosure. A person skilled in the art may know that with the evolution of the system architecture and the emergence of new business scenarios, the technical solutions of the embodiments of the disclosure are also applicable to similar technical problems.

The following embodiments of the disclosure may be applied to the communication system 100 illustrated in FIG. 1 or part of the subject, but the disclosure are not limited to the above. The subjects illustrated in FIG. 1 are examples, and the communication system may include all or some of the subjects in FIG. 1 or may include other subjects other than FIG. 1. The number and form of the subjects are arbitrary, and the connection relationship between the subjects is an example. For example, the subjects may be connected or disconnected, and the connection may be in any manner, which may be a direct connection or an indirect connection and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM^{™}), CDMA2000, Ultra Mobile Broadband (UMB), IEEE 802.11 (Wi-Fi^{™}), IEEE 802.16 (WiMAX^{™}), IEEE 802.20, Ultra-WideBand (UWB), Bluetooth^{™}, Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems may also be combined (for example, a combination of LTE or LTE-A and 5G, etc.) for application.

FIG. 2A is a schematic diagram illustrating interaction of a communication method according to an embodiment of the disclosure. As illustrated in FIG. 2A, embodiments of the disclosure relate to a communication method performed by a communication system 100. The method includes the following.

At step S2101, a terminal 101 sends first information to network device 102.

In some embodiments, the first information is configured to indicate whether the terminal 101 supports the first capability.

In some embodiments, the first capability is a capability of performing a positioning measurement on/with multiple carriers while performing communication with the network device 102 on multiple carriers.

In some embodiments, the above-mentioned multiple carriers may be at least one of carrier aggregation (CA) carrier and dual connectivity (DC) carrier.

In some embodiments, one bit of the first information may indicate whether the terminal 101 supports the first capability. For example, in a case where the value of the one bit is 0, it indicates that the first capability is supported, while in a case where the value of the one bit is 1, it indicates that the first capability is not supported.

In some embodiments, the name of the first information is for illustration only, and may be, for example, capability information. The first information may be sent via at least one of a Radio Resource Control (RRC) message, an Uplink Control Information (UCI) message, or a Media Access Control (MAC) message. For example, the terminal 101 sends an RRC message to the network device 102, and the RRC message includes the first information.

In some embodiments, the terminal 101 sends the capability information to the network device 102, and the capability information indicates whether the terminal 101 supports the first capability. The first capability may be a capability of performing a positioning measurement on multiple carriers while performing communication with the network device 102 on multiple carriers.

In some embodiments, the network device 102 receives the first information.

In some embodiments, the network device 102 obtains information on whether the terminal 101 supports the first capability based on the first information.

In some embodiments, the network device 102 may perform a variety of adaptive operations based on whether the terminal 101 supports the first capability, which may be seen in the following embodiments.

At step S2102, the terminal 101 performs the communication with the network device 102 based on a first set of carriers and performs the positioning measurement based on a second set of carriers.

In some embodiments, the terminal 101 supports the first capability. For example, in a case where the terminal 101 supports the first capability, the terminal 101 performs the communication with the network device 102 on the first set of carriers and performs simultaneously the positioning measurement based on the second set of carriers.

In some embodiments, the term "simultaneously" may refer to the "same time", the "same slot", or the "same symbol".

It may be understood that in a process of performing the communication based on the first set of carriers, the operation performed on the terminal 101 side corresponds to the operation performed on the network device 102 side. In the process of performing the positioning measurement based on the second set of carriers, the terminal 101 side performs operations related to the positioning measurement, and the network device 102 side performs operations corresponding to the operations of the terminal 101. Therefore, "communication" here may be used to refer to the communication process, while "positioning measurement" may be used to refer to the positioning measurement process. In these two processes, the terminal 101 and the network device 102 will perform corresponding operations respectively, and for the details, reference may be made to the description of the following implementation methods.

In some embodiments, there may be multiple ways to perform the communication based on the first set of carriers.

In some embodiments, performing the communication based on the first set of carriers may include at least one of:
receiving a first type of downlink information by the terminal 101 on the first set of carriers, or
sending a first type of uplink information by the terminal 101 on the first set of carriers.

In some examples, the terminal 101 performs the communication with the network device 102 based on the first set of carriers. For example, the network device 102 sends the first type of downlink information to the terminal 101. The terminal 101 may correspondingly monitor and receive the first type of downlink information on the first set of carriers.

For examples, the terminal 101 performs the communication with the network device 102 based on the first set of carriers. For example, the terminal 101 sends the first type of uplink information to the network device 102 on the first set of carriers. The network device 102 may correspondingly monitor and receive the first type of uplink information on the first set of carriers.

For example, the terminal 101 performs the communication with the network device 102 based on the first set of carriers. For example, the network device 102 sends the first type of downlink information to the terminal 101 on the first set of carriers. After receiving the first type of downlink information on the first set of carriers, the terminal 101 may send corresponding first type of uplink information on the first set of carriers, and the network device 102 receives the first type of uplink information on the first set of carriers.

In some embodiments, the first type of downlink information includes at least one of:
a PDCCH;
a PDSCH;
an SSB;
a CSI-RS; or
a TRS.

In some embodiments, the first type of uplink information may include at least one of:
a PUCCH;
a PUSCH; or
an SRS.

In some embodiments, there may be multiple ways to perform the positioning measurement based on the second set of carriers.

In some embodiments, performing the positioning measurement based on the second set of carriers includes at least one of:
receiving a positioning reference signal (PRS) by the terminal 101 on the second set of carriers, in which the PRS is used for the positioning measurement; or
sending an SRS by the terminal 101 on the second set of carriers, in which the SRS is used for the positioning measurement.

For example, in the process of performing the positioning measurement based on the second set of carriers, the network device 102 may send a PRS, and the terminal 101 may measure the PRS. The network device 102 sends a PRS on the second set of carriers, and the terminal 101 measures the PRS on the second set of carriers to obtain a measurement result of the PRS. The measurement result may be reported to a location management function (LMF) network element in a core network device, and the LMF determines location information of the terminal 101.

For example, in the process of performing the positioning measurement based on the second set of carriers, the terminal 101 may send an SRS for positioning, and the network device 102 measures the SRS. The terminal 101 sends the SRS on the second set of carriers, the network device 102 measures the SRS on the second set of carriers, obtains the measurement result of the SRS and may report the measurement result to the LMF, and the LMF determines the location information of the terminal 101.

The measurement result may include, for example, at least one of: a reference signal receiving power (RSRP), or a downlink reference signal time difference (DL RSTD).

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

For example, the first set of carriers includes CC1 and CC2, while the second set of carriers includes CC3 and CC4.

In a case where the first set of carriers and the second set of carriers form the intra-band carrier aggregation (intra-band CA) (that is, CC1, CC2, CC3 and CC4 are intra-band CCs), the four carriers are in the same frequency band. For example, the four carriers all belong to frequency band X (band X).

In a case where the first set of carriers and the second set of carriers form the inter-band carrier aggregation (inter-band CA), the first set of carriers includes carriers belonging to frequency band X, and the second set of carriers includes carriers belonging to frequency band Y. For example, the four carriers belong to different frequency bands.

In some embodiments, the first set of carriers includes carriers in the same frequency band or includes carriers from different frequency bands.

For example, the first set of carriers includes CC1 and CC2, where CC1 and CC2 are intra-band CCs (such as CC1 and CC2 belong to the same frequency band X), or CC1 and CC2 form the inter-band CA (such as CC1 belongs to frequency band X and CC2 belongs to frequency band Y).

The second set of carriers includes carriers in the same frequency band or includes carriers from different frequency bands.

For example, the second set of carriers includes CC3 and CC4. CC3 and CC4 are intra-band CCs (such as CC3 and CC4 belong to the same frequency band X), or CC3 and CC4 form the inter-band CA (such as CC3 belongs to frequency band X and CC4 belongs to frequency band Y).

In some embodiments, all or part of carriers in the first set are in the same frequency band as all or part of carriers in the second set.

For example, the first set of carriers includes CC1 and CC2, and the second set of carriers includes CC3 and CC4. CC1 and CC3 form the intra-band CA (such as CC1 and CC3 belong to the same frequency band X), or CC2 and CC4 form the intra-band CA (such as CC2 and CC4 belong to the same frequency band Y).

In the above embodiment, there may be multiple frequency band combinations between the first set of carriers and the second set of carriers.

Taking the first set of carriers including CC1 and CC2 and the second set of carriers including CC3 and CC4 as an example, as shown in the example of Table 1, there are multiple possibilities for the frequency bands to which different carriers belong, so there may be multiple frequency band combinations between the first set of carriers and the second set of carriers.

**Table 1**

| first set of carriers | | second set of carriers | |
|---|---|---|---|
| CC1 | CC2 | CC3 | CC3 |
| band X | | | |
| band X | | band Y | |
| band X | band Y | band Z | |
| band X | | band Y | band Z |
| band X | band Y | band X | band Y |
| band X | band Y | | |
| band X | band Y | band Z | band K |

Band X, band Y, band Z, and band K represent four different frequency bands.

At step S2103, the communication is performed and the positioning measurement is not performed.

In some embodiments, the terminal 101 does not support the first capability, and the time when the communication is performed based on the first set of carriers conflicts with the time when the positioning measurement is performed based on the second set of carriers. In a case where the terminal 101 does not support the first capability, in this conflict scenario, it may choose to perform the communication based on the first set of carriers, and not perform the positioning measurement based on the second set of carriers.

In some embodiments, for the communication performed based on the first set of carriers and the positioning measurement performed based on the second set of carriers by the terminal 101 and the network device 102, reference may be made to the description of the step S2102 and will not be repeated here.

In some embodiments, the priority of performing the communication based on the first set of carriers may be higher than the priority of performing the positioning measurement based on the second set of carriers. Therefore, when there is a time conflict between the communication and the positioning measurement, the communication between the terminal 101 and the network device 102 is prioritized.

In some embodiments, within a first duration of the communication, such as in the process of performing the communication operation, within n symbols before the communication operation, and within n symbols after the communication operation, the terminal 101 and the network device 102 do not perform the positioning measurement, such as not sending or receiving positioning reference signals.

The communication method involved in the embodiments of the disclosure may include at least one of steps S2101 to S2103. For example, the step S2101 may be implemented as an independent embodiment, and the step S2102 may be implemented as an independent embodiment. The step S2101 and the step S2102 may be implemented as an independent embodiment, or the step S2101 and the step S2103 may be implemented as an independent embodiment. The disclosure is not limited to the above

In some embodiments, the steps S2102 to S2103 are optional, and one or more of these steps may be omitted or replaced in different embodiments.

In some embodiments, only one of the steps S2102 and S2103 may be performed.

FIG. 2B is a schematic diagram illustrating an interaction of a communication method according to an embodiment of the disclosure. As illustrated in FIG. 2B, embodiments of the disclosure relate to a communication method performed by a communication system 100. The method includes the following.

At step S2201, the terminal 101 sends first information to the network device 102.

In some embodiments, the first information is configured to indicate whether the terminal supports the first capability.

In some embodiments, the first capability is a capability of performing a positioning measurement on multiple carriers while performing communication with the network device 102 on multiple carriers.

For the implementation of the step S2201, reference may be made to the description of the implementation of the step S2101, which is not described here.

In some embodiments, the network device 102 receives the first information.

At step S2202, the network device 102 sends third information to the terminal 101.

In some embodiments, the third information is configured to indicate a measurement gap.

In some embodiments, the terminal 101 does not support the first capability. For example, in a case where the network device 102 learns that the terminal 101 does not support the first capability, the network device 102 sends the third information to the terminal 101.

In some embodiments, the name of the third information is for illustration only, and the third information may also be called "configuration information", "measurement configuration information" or the like.

In some embodiments, the network device 102 may send an RRC message to the terminal 101, in which the RRC message includes the third information.

In some embodiments, the third information may be configured to indicate a time-domain position of the measurement gap. For example, the third information includes a time-domain parameter of the measurement gap.

In some embodiments, the third information includes at least one of:
a starting offset value of the measurement (or called measurement gap offset);
a measurement gap duration;
a measurement gap period; or
a measurement gap priority.

In some embodiments, the network device 102 may actively send the third information when learning that the terminal 101 does not support the first capability.

In some embodiments, the network device 102 issues the third information based on a request from the terminal 101 .

At this time, the step S2202 may be replaced with following steps S2202' and S2202".

At step S2202', the terminal 101 sends second information to the network device 102.

In some embodiments, the second information is configured to request third information.

In some embodiments, the name "second information" is for illustration only, and the second information may also be called "assistance information", "request information", "measurement gap assistance information", or the like.

In some embodiments, the terminal 101 may send at least one of an RRC message, a UCI, or a MAC message to the network device 102, in which the above message each carries the second information. For example, the terminal 101 sends an RRC message to the network device 102, and the RRC message includes the second information.

In some embodiments, in a case where the terminal 101 does not support the first capability, the terminal 101 sends the second information to the network device 102.

In some embodiments, the second information may include a time-domain parameter of a measurement gap preferred by the terminal 101 .

In some embodiments, the second information includes at least one of:
a starting offset value of the measurement gap;
a measurement gap duration;
a measurement gap period; or
a measurement gap priority.

In some embodiments, the network device 102 receives the second information.

At step S2202", the network device 102 sends the third information to the terminal 101.

In some embodiments, the network device 102 may configure the measurement gap based on the second information. For example, the parameters in the third information configured by the network device 102 may be the same as or different from the parameters in the second information reported by the terminal 101.

In some embodiments, the terminal 101 receives the third information.

In some implementations, the terminal 101 may receive an RRC message carrying the third information sent by the network device 102 to acquire a time-domain parameter of the measurement gap.

At step S2203, the terminal 101 performs the communication with the network device 102 on the first set of carriers and performs the positioning measurement on the second set of carriers in accordance with the measurement gap.

In some embodiments, for the operation of performing the communication by the terminal 101 with the network device 102 on the first set of carriers, reference may be made to the description of the implementation of the step S2103, which will not be repeated here.

In some embodiments, within the measurement gap duration, the terminal 101 and the network device 102 will interrupt the communication, and then resume the communication after the measurement gap duration ends.

In some embodiments, the terminal 101 may perform the positioning measurement within the measurement gap duration. For the operation of performing the positioning measurement based on the second set of carriers, reference may be made to the description of the implementation of the step S2103, which will not be repeated here.

The communication method involved in the embodiments of the disclosure may include at least one of steps S2201 to S2203. For example, the step S2201 may be implemented as an independent embodiment. The step S2201 and the step S2202 may be implemented as an independent embodiment, or the step S2201 and the step S2203 may be implemented as an independent embodiment. The disclosure is not limited to the above.

In some embodiments, the step 2202 may be replaced with the steps S2202' and S2202".

In some embodiments, the steps S2202 to S2203 are optional, and one or more of these steps may be omitted or replaced in different embodiments.

In some embodiments, the step S2202 may be combined with the steps in FIG. 2A. For example, S2101, S2102 and S2202 may be implemented as an independent embodiment.

FIG. 3A is a flowchart illustrating a communication method according to an embodiment of the disclosure. As illustrated in FIG. 3A, the communication method involved in the embodiments of the disclosure is performed by the terminal 101. The method includes the following.

At step S3101, the terminal 101 sends first information.

For the optional implementation of the step S3101, reference may be made to the optional implementation of the step S2101 in FIG. 2A and to other related parts in the embodiments involved in FIGS. 2A to 2B, which are not described here.

In some embodiments, the first information is configured to indicate whether the terminal 101 supports the first capability.

In some embodiments, the first capability is a capability of performing the positioning measurement on multiple carriers while performing the communication with the network device 102 on multiple carriers.

In some embodiments, the terminal 101 may send the first information to the network device 102 or other entities.

For example, the network device 102 receives the first information.

At step S3102, the terminal 101 performs the communication with the network device 102 based on the first set of carriers and performs simultaneously the positioning measurement based on the second set of carriers.

For optional implementations of the step S3102, reference may be made to optional implementations of the step S2102 in FIG. 2A and to other related parts in the embodiments involved in FIGS. 2A to 2B, which will not be repeated here.

In some embodiments, the terminal 101 supports the first capability. For example, in a case where the terminal 101 supports the first capability, the terminal 101 may perform the positioning measurement on the second set of carriers while performing the communication on the first set of carriers.

In some embodiments, performing the communication based on the first set of carriers may include at least one of:
receiving a first type of downlink information by the terminal 101 on the first set of carriers; or
sending a first type of uplink information by the terminal 101 on the first set of carriers.

In some embodiments, the first type of downlink information includes at least one of: a PDCCH, a PDSCH, an SSB, a CSI-RS, or a TRS.

In some embodiments, the first type of uplink information includes at least one of: a PUCCH, a PUSCH, or an SRS.

In some embodiments, performing the positioning measurement based on the second set of carriers includes at least one of:
receiving a PRS on the second set of carriers by the terminal 101, in which the PRS is used for the positioning measurement; or
sending an SRS on the second set of carriers by the terminal 101, in which the SRS is used for the positioning measurement.

In some embodiments, for the process of performing the positioning measurement based on the second set of carriers, reference may be made to the description of the step S2102. For example, the network device 102 sends the PRS on the second set of carriers, and the terminal 101 measures the PRS on the second set of carriers to obtain a measurement result of the PRS. The measurement result may be reported to an LMF network element in a core network device, and the LMF determines location information of the terminal 101. The measurement result may be at least one of: an RSRP, or a DL RSTD. As another example, the terminal 101 sends the SRS on the second set of carriers, the network device 102 measures the SRS on the second set of carriers, obtains the measurement result of the SRS and may report the measurement result to the LMF, and the LMF determines the location information of the terminal 101.

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In some embodiments, the first set of carriers includes carriers in the same frequency band or includes carriers from different frequency bands.

In some embodiments, all or part of carriers in the first set are in the same frequency band as all or part of carriers in the second set.

It may be understood that for the frequency band combinations between the first set of carriers and the second set of carriers, reference may be made to the description of optional implementations of the step S2102, which will not be repeated here.

The communication method involved in the embodiments of the disclosure may include at least one of the step S3101 to the step S3102. For example, the step S3101 may be implemented as an independent embodiment, and the steps S3101 and S3102 may be implemented as an independent embodiment. The disclosure is not limited to the above.

In some embodiments, the step S3102 is optional, and one or more of these steps may be omitted or replaced in different embodiments.

Embodiments of the disclosure are applicable to the scenario where the terminal 101 supports the first capability. In this scenario, in a case where there is a time conflict between the communication performed on multiple carriers and the positioning measurement performed on multiple carriers, the terminal 101 supporting the first capability may perform the communication on the first set of carriers and perform the positioning measurement on the second set of carriers at the same time, thereby resolving the time conflict between different operations in the multi-carrier communication process.

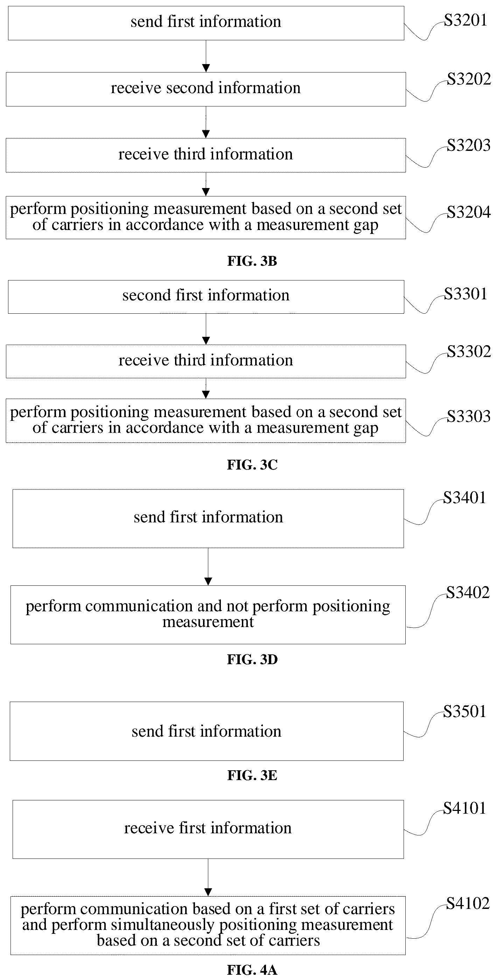

FIG. 3B is a flowchart illustrating a communication method according to an embodiment of the disclosure. As illustrated in FIG. 3B, the communication method involved in the embodiments of the disclosure is performed by the terminal 101. The method includes the following.

At step S3201, the terminal 101 sends first information.

For optional implementations of the step S3201, reference may be made to optional implementations of the step S2101 in FIG. 2A and to other related parts in the embodiments involved in FIGS. 2A to 2B, or reference may be made to optional implementations of the step S3101 in FIG. 3a, which will not be repeated here.

At step S3202, the terminal 101 sends second information.

For optional implementations of the step S3202, reference may be made to optional implementations of the step S2202', which are not described here.

In some embodiments, the terminal 101 does not support the first capability. In a case where the terminal 101 does not support the first capability, the second information may be sent to the network device 102.

In some embodiments, the second information is configured to request third information.

In some embodiments, the terminal 101 sends the second information to the network device 102 or other entities.

In some embodiments, the network device 102 receives the second information sent by the terminal 101 to acquire a time-domain parameter of the measurement gap preferred by the terminal 101.

In some embodiments, the second information is used by the network device 102 to configure the measurement gap.

In some embodiments, the second information includes at least one of:
a starting offset value of the measurement gap;
a measurement gap duration;
a measurement gap period; or
a measurement gap priority.

At step S3203, the terminal 101 receives the third information.

For optional implementations of the step S3203, reference may be made to optional implementations of the step S2202" or the step S2202, which is not described here.

In some embodiments, the third information may be sent by the network device 102 or other entities.

In some embodiments, the third information is configured to indicate the measurement gap, for example a time-domain parameter for configuring the measurement gap, such as at least one of a period, a duration, a priority, or a starting offset value for configuring the measurement gap.

In some embodiments, the time-domain parameter configured in the third information may be the same as or different from the corresponding time-domain parameter in the second information.

At **step S3204,** the terminal 101 performs the positioning measurement based on the second set of carriers in accordance with the measurement gap.

For optional implementations of the step S3204, reference may be made to optional implementations of the step S2203 in FIG. 2A and to other related parts in the embodiments involved in FIGS. 2A to 2B, which will not be repeated here.

In some embodiments, the terminal 101 performs the communication with the network device 102 on the first set of carriers.

The communication method involved in the embodiments of the disclosure may include at least one of steps S3201 to S3204. For example, the step S3201 may be implemented as an independent embodiment, and the step S3204 may be implemented as an independent embodiment. The step S3201 and the step S3202 may be implemented as an independent embodiment, or the steps S3201 and S3204 may be implemented as an independent embodiment. The disclosure is not limited to the above.

In some embodiments, the step S3202 is optional, and one or more of these steps may be omitted or replaced in different embodiments.

Embodiments of the disclosure are applicable to the scenario where the terminal 101 does not support the first capability. In this scenario, in a case where there is a time conflict between the communication performed on carriers and the positioning measurement performed on carriers, the terminal 101 that does not support the first capability may perform the positioning measurement on the second set of carriers by using the measurement gap duration while performing the communication on the first set of carriers, thereby resolving the time conflict between different operations in the multi-carrier communication process.

FIG. 3C is a flowchart illustrating a communication method according to an embodiment of the disclosure. As illustrated in FIG. 3C, the communication method involved in the embodiments of the disclosure is performed by the terminal 101. The method includes the following.

At step S3301, the terminal 101 sends first information.

For optional implementations of the step S3301, reference may be made to optional implementations of the step S2101 in FIG. 2A and other related parts in the embodiments involved in FIGS. 2A to 2B, or reference may be made to optional implementations of the steps S3101 and S320 1, which are not described here.

At step S3302, the terminal 101 receives third information.

For optional implementations of the step S3302, reference may be made to optional implementations of the step S2202 in FIG. 2B and other related parts in the embodiments involved in FIGS. 2A and 2B, which are not described here.

In some embodiments, the terminal 101 does not support the first capability.

In some embodiments, the terminal 101 may receive third information sent by the network device 102 or other entities.

In some examples, the network device 102 sends the third information to the terminal 101. For example, in a case where the network device 102 learns that the terminal 101 does not support the first capability, the network device 102 actively sends the third information.

In some embodiments, the third information is configured to indicate a measurement gap, that is, to configure a measurement gap for the terminal 101.

In some embodiments, the third information includes at least one of:
a starting offset value of the measurement gap;
a measurement gap duration;
a measurement gap period; or
a measurement gap priority.

At step S3303, the terminal 101 performs the positioning measurement based on the second set of carriers in accordance with the measurement gap.

For optional implementations of the step S3303, reference may be made to optional implementations of the step S2203 in FIG. 2B and other related parts in the embodiments involved in FIGS. 2A and 2B, which will not be repeated here.

In some embodiments, the terminal 101 communicates with the network device 102 on the first set of carriers.

The communication method involved in the embodiments of the disclosure may include at least one of steps S3301 to S3303. For example, the step S3301 may be implemented as an independent embodiment, and the step S3303 may be implemented as an independent embodiment. The steps S3201 and S3203 may be implemented as an independent embodiment. The disclosure is not limited to the above.

In some embodiments, the step S3202 is optional, and one or more of these steps may be omitted or replaced in different embodiments.

Embodiments of the disclosure are applicable to the scenario where the terminal 101 does not support the first capability. In this scenario, the network device 102 may actively configure the measurement gap for the terminal 101, such that in a case where there is a time conflict between the communication performed on multiple carriers and the positioning measurement performed on multiple carriers, the terminal 101 that does not support the first capability may use the measurement gap duration to perform the positioning measurement on the second set of carriers, thereby resolving the time conflict between different operations in the multi-carrier communication process.

FIG. 3D is a flowchart illustrating a communication method according to an embodiment of the disclosure. As illustrated in FIG. 3D, the communication method involved in the embodiments of the disclosure are performed by the terminal 101. The method includes the following.

At step S3401, the terminal 101 sends first information.

For optional implementations of the step S3401, reference may be made to optional implementations of the step S2101 in FIG. 2a and other related parts in the embodiments involved in FIGS. 2A to 2B, which will not be repeated here.

At step S3402, the terminal 101 performs the communication and does not perform the positioning measurement.

For optional implementations of the step S3402, reference may be made to optional implementations of the step S2103 in FIG. 2A, which will not be repeated here.

In some embodiments, the terminal 101 does not support the first capability, and the time when the communication is performed based on the first set of carriers conflicts with the time when the positioning measurement is performed based on the second set of carriers. In a case where the terminal 101 does not support the first capability, the terminal 101 may choose to perform the communication and not perform the positioning measurement in this conflict scenario.

The communication method involved in the embodiments of the disclosure may include at least one of the step S3401 to the step S3402. For example, the step S3401 may be implemented as an independent embodiment, and the step S3402 may be implemented as an independent embodiment. The disclosure is not limited to the above.

In some embodiments, the step S3402 is optional, and one or more of these steps may be omitted or replaced in different embodiments.

Embodiments of the disclosure are applicable to a scenario where the terminal 101 does not support the first capability. In this scenario, in a case where there is a time conflict between the communication and the positioning measurement performed on carriers, the terminal 101 that does not support the first capability may preferentially perform the communication on the first set of carriers and may not perform the positioning measurement, thereby resolving the time conflict between different operations in the multi-carrier communication process.

FIG. 3E is a flowchart illustrating a communication method according to an embodiment of the disclosure. As illustrated in FIG. 3E, embodiments of the disclosure relate to a communication method performed by a terminal 101. The method includes the following.

At step S3501, the terminal 101 sends first information.

For optional implementations of the step S3501, reference may be made to optional implementations of the step S2101 or S2201 in FIGS. 2A to 2B, or reference may be made to optional implementations of the steps S3101, S3201, S3301 or S3401 in FIGS. 3A to 3D and other related parts in the embodiments involved in FIGS. 2A to 2B or FIGS. 3A to 3E, which will not be repeated here.

In some embodiments, there are multiple embodiments for determining whether the terminal 101 supports the first capability. For example, in a case where the terminal 101 supports the first capability, the step S3501 may be combined with the step S3102. As another example, in a case where the terminal 101 does not support the first capability, the step S3501 may be combined with the step S3304 or with the steps S3202 to S3204.

In some embodiments, the terminal 101 may perform the communication based on the first set of carriers. For example, the terminal 101 receives or sends data on the first set of carriers.

In some embodiments, the terminal 101 may perform the positioning measurement based on the second set of carriers. For example, the terminal 101 receives or sends a reference signal used for the positioning measurement on the second set of carriers. For example, the terminal 101 receives a PRS for positioning sent by the network device 102 on the second set of carriers, and measures and obtains a measurement result of the PRS. For example, the terminal 101 sends an SRS for positioning on the second set of carriers to the network device 102 or other subjects, such that the network device 102 or other subjects receive and obtain the measurement result.

In some embodiments, in a case where the terminal 101 supports the first capability, the communication is performed based on the first set of carriers, and the positioning measurement is performed based on the second set of carriers.

In some embodiments, performing the communication based on the first set of carriers may include at least one of:
receiving a first type of downlink information by the terminal 101 on the first set of carriers, or
sending a first type of uplink information by the terminal 101 on the first set of carriers.

In some embodiments, the first type of downlink information includes at least one of: a PDCCH, a PDSCH, an SSB, a CSI-RS, or a TRS.

In some embodiments, the first type of uplink information includes at least one of: a PUCCH, a PUSCH, or an SRS.

In some embodiments, performing the positioning measurement based on the second set of carriers includes at least one of:
receiving a PRS by the terminal 101 on the second set of carriers, in which the PRS is used for the positioning measurement; or
sending an SRS by the terminal 101 on the second set of carriers, in which the SRS is used for the positioning measurement.

In some embodiments, in a case where the terminal 101 does not support the first capability, the second information is sent to request the third information.

In some embodiments, in a case where terminal 101 does not support the first capability, the third information is received.

In some embodiments, in a case where the terminal 101 does not support the first capability, the positioning measurement may be performed within the measurement gap duration based on the measurement gap indicated by the third information.

In some embodiments, in a case where the terminal 101 does not support the first capability, the communication is performed and the positioning measurement is not performed.

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In some embodiments, the first set of carriers includes carriers in the same frequency band or includes carriers from different frequency bands. The second set of carriers includes carriers in the same frequency band or includes carriers from different frequency bands.

In some embodiments, all or part of carriers in the first set are in the same frequency band as all or part of carriers in the second set.

Embodiments of the disclosure relate to a communication method performed by a terminal 101. The method includes the following.

At step S3601, the terminal 101 sends first information.

For optional implementations of the step S3601, reference may be made to optional implementations of the step S2101 or S2201 in FIG. 2A to 2B, or reference may be made to optional implementations of the steps S3101, S3201, S3301 or S3401 in FIGS. 3A to 3D, and other related parts in the embodiments involved in FIGS. 2A to 2B or 3A to 3E, which will not be repeated here.

At step S3602, communication is performed based on a first set of carriers, and a positioning measurement is performed based on a second set of carriers.

For optional implementations of the step S3602, reference may be made to optional implementations of the step S2102 in FIG. 2A, or reference may be made to optional implementations of the step S3102 in FIG. 3A, and other related parts in the embodiments involved in FIGS. 2A to 2B or FIGS. 3A to 3E, which will not be repeated here.

In some embodiments, in a case where the terminal 101 supports the first capability, the communication is performed based on the first set of carriers, and the positioning measurement is performed based on the second set of carriers.

In some embodiments, performing the communication based on the first set of carriers may include at least one of:
receiving a first type of downlink information by the terminal 101 on the first set of carriers, or
sending a first type of uplink information by the terminal 101 on the first set of carriers.

In some embodiments, the first type of downlink information includes at least one of: a PDCCH, a PDSCH, an SSB, a CSI-RS, or a TRS.

In some embodiments, the first type of uplink information includes at least one of: a PUCCH, a PUSCH, or an SRS.

In some embodiments, performing the positioning measurement based on the second set of carriers includes at least one of:
receiving a PRS by the terminal 101 on the second set of carriers, in which the PRS is used for the positioning measurement; or
sending an SRS by the terminal 101 on the second set of carriers, in which the SRS is used for the positioning measurement.

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In some embodiments, the first set of carriers includes carriers in the same frequency band or includes carriers from different frequency bands. The second set of carriers includes carriers in the same frequency band or includes carriers from different frequency bands.

In some embodiments, all or part of carriers in the first set are in the same frequency band as all or part of carriers in the second set.

Embodiments of the disclosure relate to a communication method performed by a terminal 101. The method includes the following.

At step S3701, the terminal 101 sends first information.

For optional implementations of the step S3701, reference may be made to optional implementations of the step S2101 or S2201 in FIG. 2A to 2B, or reference may be made to optional implementations of the steps S3101, S3201, S3301 or S3401 in FIGS. 3A to 3D, and other related parts in the embodiments involved in FIGS. 2A to 2B or 3A to 3E, which will not be repeated here.

At step S3702, the second information is sent.

For optional implementations of the step S3702, reference may be made to optional implementations of the step S2202', or reference may be made to optional implementations of the step S3202 in FIG. 3b and other related parts in the embodiments involved in FIGS. 2A to 2B or FIGS. 3A to 3E, which will not be repeated here.

In some embodiments, in a case where the terminal 101 does not support the first capability, the second information is sent.

In some embodiments, the second information is configured to request third information.

In some embodiments, the second information includes at least one of:
a starting offset value of the measurement gap;
a measurement gap duration;
a measurement gap period; or
a measurement gap priority.

At step S3703, the terminal 101 receives the third information.

For optional implementations of the step S3703, reference may be made to optional implementations of the step S2202", or reference may be made to optional implementations of the step S3203 in FIG. 3B, and other related parts in the embodiments involved in FIGS. 2A to 2B or FIGS. 3A to 3E, which will not be repeated here.

In some embodiments, the third information is configured to indicate a measurement gap.

Embodiments of the disclosure relate to a communication method performed by a terminal 101. The method includes the following.

At step S3801, the terminal 101 sends first information.

For optional implementations of the step S3801, reference may be made to optional implementations of the step S2101 or S2201 in FIG. 2A to 2B, or reference may be made to optional implementations of the steps S3101, S3201, S3301 or S3401 in FIGS. 3A to 3D, and other related parts in the embodiments involved in FIGS. 2A to 2B or FIGS. 3A to 3E, which will not be repeated here.

At step S3802, the terminal 101 receives third information.

For optional implementations of the step S3802, reference may be made to optional implementations of the step S2202 in FIG. 2B, or reference may be made to optional implementations of the step S3302 in FIG. 3C, and other related parts in the embodiments involved in FIGS. 2A to 2B or FIGS. 3A to 3E, which will not be repeated here.

In some embodiments, in a case where the terminal 101 does not support the first capability, the third information is received.

In some embodiments, the third information is configured to indicate a measurement gap.

In some embodiments, the third information includes at least one of:
a starting offset value of the measurement gap;
a measurement gap duration;
a measurement gap period; or
a measurement gap priority.

Embodiments of the disclosure relate to a communication method performed by the terminal 101, and the method includes: the step S3701, the step S702, the step S3703 and a step 3704. Or the method includes: a step S3801, a step S3802 and a step S3704.

At step S3704, the terminal 101 performs communication with the network device on a first set of carriers, and the terminal 101 performs a positioning measurement based on a second set of carriers in accordance with the measurement gap.

For optional implementations of the step 3704, reference may be made to optional implementations of the step S2203 in FIG. 2B, or reference may be made to optional implementations of the step S3303 in FIG. 3C, which will not be repeated here.

Embodiments of the disclosure relate to a communication method performed by a terminal 101. The method includes the following.

At step S3901, the terminal 101 sends first information.

For optional implementations of the step S301, reference may be made to optional implementations of the step S2101 or S2201 in FIGS. 2A to 2B, or reference may be made to optional implementations of the steps S3101, S3201, S3301 or S3401 in FIGS. 3A to 3D, and other related parts in the embodiments involved in FIGS. 2A to 2B or FIGS. 3A to 3E, which will not be repeated here.

At step S3902, communication is performed and a positioning measurement is not performed.

For optional implementations of the step S3902, reference may be made to optional implementations of the step S2103 in FIG. 2A, or reference may be made to implementations of the step S3401 in FIG. 3D, which will not be repeated here.

In some embodiments, in a case where the terminal 101 does not support the first capability and a time when the communication is performed based on the first set of carriers conflicts with a time when the positioning measurement is performed based on the second set of carriers, the terminal 101 performs the communication and does not perform the positioning measurement.

FIG. 4A is a flowchart illustrating a communication method according to an embodiment of the disclosure. As illustrated in FIG. 4A, the communication method involved in this embodiment of the disclosure is performed by the network device 102. The method includes the following.

At step S4101, the network device 102 receives first information.

For optional implementations of the step S4101, reference may be made to optional implementations of the step S2101 in FIG. 2A, and other related parts in the embodiments involved in FIGS. 2A to 2B, which will not be repeated here.

In some embodiments, the first information is configured to indicate whether the terminal supports the first capability.

In some embodiments, the first capability is a capability of perform a positioning measurement on multiple carriers while performing communication with a network device on multiple carriers.

In some embodiments, the network device 102 may receive first information sent by the terminal 101 or other entities.

In step S4102, the network device 102 performs the communication based on a first set of carriers and performs the positioning measurement based on a second set of carriers.

For optional implementations of the step S4102, reference may be made to optional implementations of the step S2102 in FIG. 2A and other related parts in the embodiment involved in FIG. 2, which will not be repeated here.

In some embodiments, on a side of the network device 102, performing the communication based on the first set of carriers may refer to an operation corresponding to an operation performed by the terminal 101 during the communication process, and reference may be made to the description of the step S2102, which will not be repeated here.

In some embodiments, on the side of the network device 102, performing the positioning measurement based on the second set of carriers may refer to an operation corresponding to an operation performed by the terminal 101 during the positioning measurement process, and reference may be made to the description of the step S2102, which will not be repeated here.

In some embodiments, the terminal 101 supports the first capability. For example, in a case where the terminal 101 supports the first capability, the network device 102 performs the step S4102.

In some embodiments, performing the communication based on the first set of carriers may include at least one of:
sending a first type of downlink information by the network device 102 on the first set of carrier; or
receiving a first type of uplink information by the network device 102 on the first set of carriers.

For example, the network device 102 sends the first type of downlink information to the terminal 101 or other entities.

In some embodiments, the first type of downlink information includes at least one of: a PDCCH, a PDSCH, an SSB, a CSI-RS, or a TRS.

As another example, the network device 102 may receive the first type of uplink information sent by the terminal 101 or other hosts.

In some embodiments, the first type of uplink information includes at least one of: a PUCCH, a PUSCH, or an SRS.

In some embodiments, performing the positioning measurement based on the second set of carriers includes at least one of:
sending a PRS on the second set of carriers, in which the PRS is used for the positioning measurement; or
receiving an SRS on the second set of carriers, in which the SRS is used for the positioning measurement.

For example, the network device 102 sends the PRS to the terminal 101 on the second set of carriers, and the terminal 101 measures the PRS and obtains a measurement result.

As another example, the network device 102 receives the SRS sent by the terminal 101 on the second set of carriers and measures the SRS to obtain the measurement result.

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In some embodiments, the first set of carriers includes carriers in the same frequency band or includes carriers from different frequency bands. The second set of carriers includes carriers in the same frequency band or includes carriers from different frequency bands.

In some embodiments, all or part of carriers in the first set are in the same frequency band as all or part of carriers in the second set.

For these embodiments, reference may be made to the afore-mentioned Table 1 and the implementations of related embodiments in Table 1, which will not be described in detail here.

The communication method involved in the embodiments of the disclosure may include at least one of the steps S4101 to S4102. For example, the step S4101 may be implemented as an independent embodiment. The disclosure is not limited to the above.

In some embodiments, the step S4102 is optional, and one or more of these steps may be omitted or replaced in different embodiments.

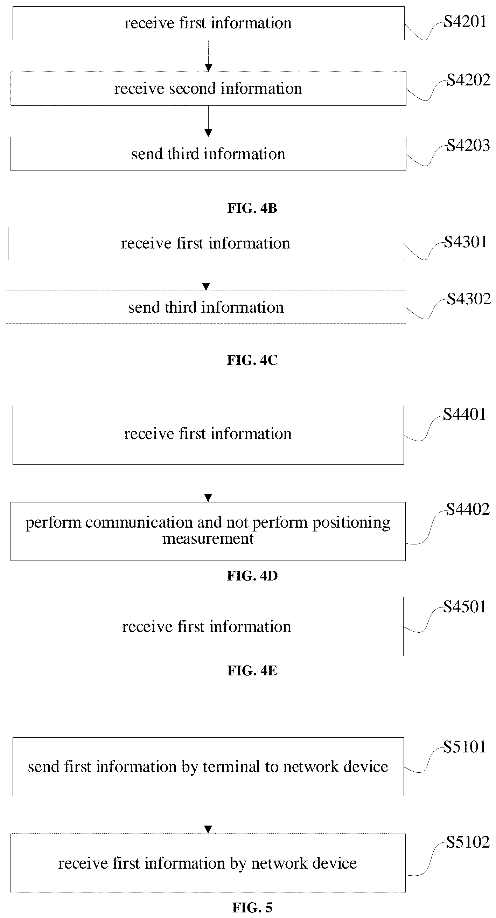

FIG. 4B is a flowchart illustrating a communication method according to an embodiment of the disclosure. As illustrated in FIG. 4B, the communication method involved in this embodiment of the disclosure is performed by the network device 102. The method includes the following.

At step S4201, the network device 102 receives first information.

For optional implementations of the step S4201, reference may be made to optional implementations of the step S2101 in FIG. 2A, and other related parts in the embodiments involved in FIGS. 2A to 2B, which will not be repeated here.

At step S4202, the network device 102 receives the second information.

For optional implementations of the step S4202, reference may be made to optional implementations of the step S2202", which will not be repeated here.

In some embodiments, the network device 102 may receive the second information sent by the terminal 101 or other entities.

In some embodiments, the second information is configured to request third information.

In some embodiments, the second information is configured to indicate a time-domain parameter of a measurement gap preferred by terminal 101.

In some embodiments, the terminal 101 does not support the first capability. In a case where the terminal 101 does not support the first capability, the second information is sent to the network device 102.

In some embodiments, the second information includes at least one of:
a starting offset value of the measurement gap;
a measurement gap duration;
a measurement gap period; or
a measurement gap priority.

At step S4203, the network device 102 sends the third information.

For optional implementations of the step S4203, reference may be made to optional implementations of the step S2202" or the step S2202, which will not be repeated here.

In some embodiments, the third information is configured to indicate a measurement gap.

In some embodiments, the network device 102 sends the third information to the terminal 101 or other entities.

In some embodiments, the third information is configured to indicate the measurement gap, for example a time-domain parameter for configuring the measurement gap, such as at least one of a period, a duration, a priority, and a starting offset value for configuring the measurement gap.

In some embodiments, the time-domain parameter configured in the third information may be the same as or different from the corresponding time-domain parameter in the second information.

In some embodiments, the terminal 101 may perform the positioning measurement within the measurement gap duration based on the measurement gap configured in the third information.

The communication method involved in the embodiments of the disclosure may include at least one of the steps S4201 to S4203. For example, the step S4201 may be implemented as an independent embodiment. The step S4201 and the step 4203 may be implemented as an independent embodiment. The disclosure is not limited to the above.

FIG. 4C is a flowchart illustrating a communication method according to an embodiment of the disclosure. As illustrated in FIG. 4C, the communication method according to this embodiment of the disclosure is performed by the network device 102. The method includes the following.

At step S4301, the network device 102 receives first information.

For optional implementations of the step S4301, reference may be made to optional implementations of the step S2101 in FIG. 2A, and other related parts in the embodiments involved in FIGS. 2A to 2B, which will not be repeated here.

At step S4302, the network device 102 sends the third information.

For optional implementations of the step S4302, reference may be made to optional implementations of the step S2202 in FIG. 2B and other related parts in the embodiments involved in FIGS. 2A and 2B, which are not fully described here.

In some embodiments, the network device 102 sends the third information to the terminal 101 or other entities.

In some embodiments, the terminal 101 does not support the first capability, and the network device 102 actively sends the third information when the network device 102 learns that the terminal 101 does not support the first capability.

In some embodiments, the third information is configured to indicate a measurement gap.

In some embodiments, the third information includes at least one of:
a starting offset value of the measurement gap;
a measurement gap duration;
a measurement gap period; or
a measurement gap priority.

In some embodiments, the terminal 101 performs the positioning measurement based on the second set of carriers in accordance with the measurement gap.

The communication method according to the embodiments of the disclosure may include at least one of the steps S4301 to S4302. For example, the step S4301 may be implemented as an independent embodiment. The disclosure is not limited to the above.

In some embodiments, the step S4302 is optional, and one or more of these steps may be omitted or replaced in different embodiments.

FIG. 4D is a flowchart illustrating a communication method according to an embodiment of the disclosure. As illustrated in FIG. 4D, the communication method according to this embodiment of the disclosure is performed by the network device 102. The method includes the following.

At step S4401, the network device 102 receives first information.

For optional implementations of the step S4401, reference may be made to optional implementations of the step S2101 in FIG. 2A, and other related parts in the embodiments involved in FIGS. 2A to 2B, which will not be repeated here.

At step S4402, the network device 102 performs communication and does not perform a positioning measurement.

For optional implementations of the step S4402, reference may be made to optional implementations of the step S2103 in FIG. 2A, which will not be repeated here.

In some embodiments, the terminal 101 does not support the first capability, and a time when the communication is performed based on the first set of carriers conflicts with a time when the positioning measurement is performed based on the second set of carriers. In a case where the terminal 101 does not support the first capability, the terminal 101 may choose to perform the communication and not perform the positioning measurement in this conflict scenario.

The communication method according to the embodiments of the disclosure may include at least one of the step S4401 to the step S4402. For example, the step S4401 may be implemented as an independent embodiment. The disclosure is not limited to the above.

In some embodiments, the step S4402 is optional, and one or more of these steps may be omitted or replaced in different embodiments.

It may be understood that for optional implementations of the embodiments of FIG. 4A to FIG. 4D and related embodiments, reference may be made to optional implementations of the corresponding steps in FIG. 3A to FIG. 3E.

FIG. 4E is a flowchart illustrating a communication method according to an embodiment of the disclosure. As illustrated in FIG. 4E, embodiments of the disclosure relate to a communication method performed by a network device 102. The method includes the following.

At step S4501, the network device 102 receives first information.

For optional implementations of the step S4501, reference may be made to optional implementations of the step S2101 or the step S2201 in FIGS. 2A to 2B, or reference may be made to optional implementations of the steps S4101, S4201, S4301 or S4401 in FIGS. 4A to 4D, and other related parts in the embodiments involved in FIGS. 2A to 2B or FIGS. 3A to 3E, which will not be repeated here.

In some embodiments, there are multiple embodiments depending on whether the terminal 101 supports the first capability. For example, in a case where the terminal 101 supports the first capability, the step S4501 may be combined with the step S4102. As another example, in a case where the terminal 101 does not support the first capability, the step S401 may be combined with the step S4202 or with the step S4302.

In some embodiments, the network device 102 may perform the communication based on the first set of carriers. For example, the network device 102 may receive or send data on the first set of carriers.

In some embodiments, the network device 102 may perform the positioning measurement based on the second set of carriers. For example, the network device 102 receives or sends a reference signal for the positioning measurement on the second set of carriers. For example, the network device 102 sends a PRS for positioning on the second set of carriers to the terminal 101 or other subjects, such that the terminal 101 or other subjects receive and obtain a measurement result. For example, the network device 102 receives and measures an SRS for positioning sent by the terminal 101 on the second set of carriers to obtain the measurement result of the SRS.

In some embodiments, the terminal 101 supports the first capability, and may perform the communication based on the first set of carriers and the positioning measurement based on the second set of carriers. At this time, the operation of the network device 102 corresponds to that of the terminal 101.

For example, performing the communication by the network device 102 based on the first set of carriers may refer to: in a process of performing the communication with the terminal 101 based on the first set of carriers, performing an operation corresponding to an operation performed by the terminal 101, and reference may be made to optional implementations of the step S2102, which will not be repeated here.

For example, performing the positioning measurement by the network device 102 based on the second set of carriers may refer to: in a process of performing the positioning measurement by the terminal 101based on the second set of carriers, performing an operation corresponding to the an operation of the terminal 101 by the network device 102, and reference may be made to optional implementations of the step S2102, which will not be repeated here.

In some embodiments, performing the communication based on the first set of carriers may include at least one of:
sending a the first type of downlink information by the network device 102 on the first set of carriers; or
receiving a first type of uplink information by the network device 102 on the first set of carriers.

In some embodiments, the first type of downlink information includes at least one of: a PDCCH, a PDSCH, an SSB, a CSI-RS, or a TRS.

In some embodiments, the first type of uplink information includes at least one of: a PUCCH, a PUSCH, or an SRS.

In some embodiments, performing the positioning measurement based on the second set of carriers includes at least one of:
sending a PRS on the second set of carriers, in which the PRS is used for the positioning measurement; or
receiving an SRS on the second set of carriers, in which the SRS is used for the positioning measurement.

In some embodiments, the terminal 101 does not support the first capability, and the network device 102 receives the second information.

In some embodiments, the terminal 101 does not support the first capability, and the network device 102 sends the third information.

In some embodiments, the terminal 101 does not support the first capability, performs the communication with the network device 102, and does not perform the positioning measurement.

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In some embodiments, the first set of carriers includes carriers in the same frequency band or includes carriers from different frequency bands. The second set of carriers includes carriers in the same frequency band or includes carriers from different frequency bands.

In some embodiments, all or part of carriers in the first set are in the same frequency band as all or part of carriers in the second set.

Embodiments of the disclosure relate to a communication method performed by the network device 102. The method includes the following.

At step S4601, the network device 102 receives first information.

For optional implementations of the step S4601, reference may be made to optional implementation methods of step S2101 or S2201 in Figures 2a to 2b, or can refer to the optional implementations of the steps S4101, S4201, S4301 or S4401 in FIGS. 4A to 4E, and other related parts in the embodiments involved in FIGS. 2A to 2B or FIGS. 3A to 3E, which will not be repeated here.

At step S4602, the terminal 101 supports the first capability, and the network device 102 performs the communication based on the first set of carriers and performs simultaneously the positioning measurement based on the second set of carriers.

For optional implementations of the step S4602, reference may be made to optional implementations of the step S2102 in FIG. 2A, or reference may be made to optional implementations of the step S4102 in FIG. 4A, and other related parts in the embodiments involved in FIGS. 2A to 2B or FIGS. 3A to 3E, which will not be repeated here.

In some embodiments, performing the communication based on the first set of carriers may include at least one of:
sending a first type of downlink information by the network device 102 on the first set of carriers; or
receiving a first type of uplink information by the network device 102 on the first set of carriers.

In some embodiments, the first type of downlink information includes at least one of: a PDCCH, a PDSCH, an SSB, a CSI-RS, or a TRS.

In some embodiments, the first type of uplink information includes at least one of: a PUCCH, a PUSCH, or an SRS.

In some embodiments, performing the positioning measurement based on the second set of carriers includes at least one of:
sending a PRS on the first set of carriers, in which the PRS is used for the positioning measurement; or
receiving an SRS on the first set of carriers, in which the SRS is used for the positioning measurement.

In some embodiments, a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

In some embodiments, the first set of carriers includes carriers in the same frequency band or includes carriers from different frequency bands. The second set of carriers includes carriers in the same frequency band or includes carriers from different frequency bands.

In some embodiments, all or part of carriers in the first set are in the same frequency band as all or part of carriers in the second set.

Embodiments of the disclosure relate to a communication method performed by the network device 102. The method includes the following.

At step S4701, the network device 102 receives first information.

For optional implementations of the step S4701, reference may be made to optional implementations of the step S2102 or S2202 in FIGS. 2A to 2B, or reference may be made to optional implementations of the steps S4101, S4201, S4301 or S4401 in FIGS. 4A to 4D, and other related parts in the embodiments involved in FIGS. 2A to 2B or FIGS. 3A to 3E, which will not be repeated here.

At step S4702, the terminal 101 does not support the first capability, and the network device 102 receives second information. The second information is configured to request third information.

For optional implementations of the step S4702, reference may be made to optional implementations of the step S2203', or reference may be made to optional implementations of the step S4202, and other related parts in the embodiments involved in FIGS. 2A to 2B or FIGS. 3A to 3E, which will not be repeated here.

At step S4703, the network device 102 sends the third information. The third information is configured to indicate a measurement gap.

For optional implementations of the step S4703, reference may be made to optional implementations of the step S2202", or reference may be made to optional implementations of the step S4203, and other related parts in the embodiments involved in FIGS. 2A to 2B or FIGS. 3A to 3E, which will not be repeated here.

In some embodiments, the second information includes at least one of:
a starting offset value of the measurement gap;
a measurement gap duration;
a measurement gap period; or
a measurement gap priority.

Embodiments of the disclosure relate to a communication method performed by the network device 102. The method includes the following.

At step S4801, the network device 102 receives first information.

For optional implementations of the step S4801, reference may be made to optional implementations of the step S2101 or S2201 in FIGS. 2A to 2B, or reference may be made to optional implementations of the steps S4101, S4201, S4301 or S4401 in FIGS. 4A to 4D, and other related parts in the embodiments involved in FIGS. 2A to 2B or FIGS. 3A to 3E, which will not be repeated here.

At step S4802, the network device 102 sends the third information.

For optional implementations of the step S4802, reference may be made to optional implementations of the step S2202 in FIG. 2B, or reference may be made to optional implementations of the step S4302, other related parts in the embodiments involved in FIGS. 2A to 2B or FIGS. 3A to 3E, which will not be repeated here.

In some embodiments, in a case where the terminal 101 does not support the first capability, the network device 102 sends the third information.

In some embodiments, the third information is configured to indicate a measurement gap.

In some embodiments, the third information includes at least one of:
a starting offset value of the measurement gap;
a measurement gap duration;
a measurement gap period; or
a measurement gap priority.

Embodiments of the disclosure relate to a communication method performed by the network device 102. The method includes the following.

At step S4901, the network device 102 receives first information.

For optional implementations of the step S4901, reference may be made to optional implementations of the step S2101 or S2201 in FIGS. 2A to 2B, or reference may be made to optional implementations of the steps S4101, S4201, S4301 or S4401 in FIGS. 4A to 4D, AND other related parts in the embodiments involved in FIGS. 2A to 2B or FIGS. 3A to 3E, which will not be repeated here.

At step S4902, the network device 102 performs the communication and does not perform the positioning measurement.

For optional implementations of the step S4902, reference may be made to optional implementations of the step S2103 in FIGS. 2A, or reference may be made to implementations of the step S4402, which will not be repeated here.

In some embodiments, in a case where the terminal 101 does not support the first capability and a time when the communication is performed based on the first set of carriers conflicts with the time when the positioning measurement is performed based on the second set of carriers, the network device 102 performs the communication and does not perform the positioning measurement.

In some embodiments, performing the communication by the network device 102 may refer to: in a process of performing the communication based on the first set of carriers, performing an operation corresponding to an operation performed by the terminal 101, and for example, reference may be made to optional implementations of the step S2102, which will not be described in detail here.

In some embodiments, performing the positioning measurement by the network device 102 may refer to: in a process of performing the positioning measurement based on the second set of carriers, performing an operation corresponding to an operation performed by the terminal 101, and reference may be made to optional implementations of the step S2102, which will not be repeated here.

FIG. 5 is a flowchart illustrating a communication method according to an embodiment of the disclosure. As illustrated in FIG. 5, embodiments of the disclosure relate to a communication method performed by a communication system 100. The method includes the following.

At step S5101, the terminal 101 sends first information to network device 102.

For optional implementations of the step S5101, reference may be made to the step S2101 or S2201 of FIGS. 2A to 2B, or reference may be made to optional implementations of the steps S3101, S3201, S3301 or S3401 of FIGS. 3A to 3E, and other related parts in the embodiments involved in FIGS. 2A to 2B or FIGS. 3A to 3E, which will not be repeated here.

In some embodiments, the first information is configured to indicate whether the terminal supports the first capability.

In some embodiments, the first capability is a capability of performing a positioning measurement on multiple carriers while performing communication with a network device on multiple carriers.

At step S5102, the network device 102 receives the first information.

For optional implementations of the step S5102, reference may be made to optional implementations of the step S2101 or S2201 in FIGS. 2A to 2B, or reference may be made to optional implementations of the steps S4101, S4201, S4301 or S4401 in FIGS. 4A to 4D, and other related parts in the embodiments involved in FIGS. 2A to 2B or FIGS. 3A to 3E, which will not be repeated here.

In some embodiments, the above method may include the methods described in the above embodiments of the communication system side, terminal side, network device side, which will not be repeated here.

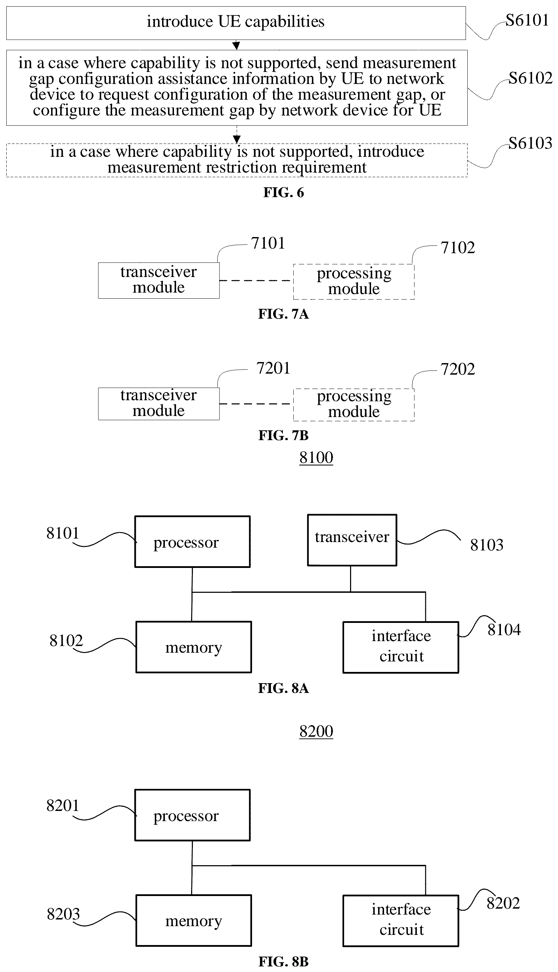

FIG. 6 is a flowchart illustrating a communication method according to an embodiment of the disclosure. As illustrated in FIG. 6, embodiments of the disclosure relate to a communication method. The method includes the following.

At step S6101, UE capability is introduced, i.e., whether the UE may simultaneously process CA/DC operation and multi-carrier positioning measurement.

In some embodiments, the UE capability may be reported via the afore-mentioned first information.

In some embodiments, the capability of simultaneously processing the CA/DC operation and the multi-carrier positioning measurement may be the afore-mentioned first capability.

In some embodiments, when the UE supports this capability, relevant operations may be performed with reference to the following embodiments 1 and 2, or with reference to the implementation of steps S2102, S3102 or S4102 of the afore-mentioned embodiments.

### Embodiment 1:

The UE performs the CA/DC operations on CC1 and CC2, for example, receiving signals such as PDCCH/PDSCH/SSB/CSI-RS/TRS, and the UE needs to perform the PRS positioning measurement on CC3 and CC4. If the UE supports this UE capability, the UE may receive the above signals on CC1 and CC2 and receive PRS positioning reference signals on CC3 and CC4 for positioning measurement.

### Embodiment 2:

The UE performs the CA/DC operations on CC1 and CC2, for example, transmitting PUCCH/PUSCH/SRS and other signals, and the UE needs to transmit the SRS positioning reference signals on CC3 and CC4. If the UE supports this UE capability, the UE may transmit the above signals on CC1 and CC2, and send the SRS positioning reference signals on CC3 and CC4.

A relationship between CC1, CC2, CC3 and CC4 frequency bands may be:
CC1, CC2, CC3 and CC4 being intra-band CCs;
CC1 and CC2 being intra-band CCs (band X), and CC3 and CC4 being intra-band CCs (band Y);
CC1 and CC2 being inter-band CCs (band X), CC1 belonging to band X, CC2 belonging to band Y, and CC3 and CC4 being intra-band CCs (band Z);
CC1 and CC2 being intra-band CCs (band X), CC3 and CC4 being inter-band CCs, CC3 belonging to band Y, and CC4 belonging to band Z;
CC1 and CC3 being intra-band CCs (band X), CC2 and CC4 being intra-band CCs (band Y);
CC1 belonging to band X, CC2, CC3 and CC4 belonging to band Y, CC2, CC3 and CC4 being intra-band CCs; or
CC1, CC2, CC3 and CC4 being inter-band CCs.

At step S6102, if the UE does not support the UE capability in the step S6101, the UE sends measurement gap configuration assistance information to the network to request configuration of the measurement gap. Or the network directly configures the measurement gap to the UE.

In some embodiments, the measurement gap configuration assistance information may be the afore-mentioned second information.

In some embodiments, the network may configure the measurement gap by sending the afore-mentioned third information.

In some embodiments, in a case where the UE does not support this capability, relevant operation may be performed with reference to the following embodiments 1 and 2, or to the implementations of the steps S2202 to S2203, S3202 to S3203, S3302, S4202 to S4203 or S4302 of the afore-mentioned embodiments.

### Embodiment 1:

If the UE does not support the UE capability of the step S6101, for example, CC1 and CC2 are intra-band CCs (band X), CC3 and CC4 are intra-band CCs (band Y), and the UE needs the measurement gap to perform reception or transmission of a positioning reference signal (PRS reception or SRS transmission), then the UE sends the measurement gap configuration assistance information to the serving cell. The assistance information at least includes the following configuration information:
a starting offset value of the measurement gap;
a measurement gap duration;
a measurement gap period; or
a measurement gap priority.

### Embodiment 2:

If the UE does not support the UE capability in the step S6101, for example, CC1 and CC2 are intra-band CCs (band X), CC3 and CC4 are intra-band CCs (band Y), and the UE needs the measurement gap to perform reception or transmission of a positioning reference signal (PRS reception or SRS transmission), then the serving cell configures measurement gap configuration information to the UE. The configuration information at least includes the following information:
a starting offset value of the measurement gap;
a measurement gap duration;
a measurement gap period; or
a measurement gap priority.

At step S6103: if the UE does not support the UE capability in the step S6101, a measurement restriction requirement is introduced.

In some implementations, when the UE does not support this capability, relevant operations may be performed with reference to the following embodiment 1, or with reference to the implementation of the steps S2103, S3402 or S4402 of the afore-mentioned embodiment.

### Embodiment 1:

CC1 and CC2 are intra-band CCs (band X), CC3 and CC4 are intra-band CCs (band Y), and the UE may perform the CA/DC operations on CC1 and CC2. In addition, the UE may also receive or send positioning reference signals (PRS reception or SRS transmission) on CC3 and CC4. If the UE does not support the UE capability of step S6101, then the UE gives priority to performing the CA/DC operations. For example, the reception of signals such as PDCCH/PDSCH/SSB/CSI-RS/TRS or the transmission of signals such as PUCCH/PUSCH/SRS and the reception or transmission of positioning reference signals (PRS reception or SRS transmission) are not performed in the process of the CA/DC operations and within X symbols before and after the process.

In the embodiments of the disclosure, part or all of the steps and their optional implementations may be arbitrarily combined with part or all of the steps in other embodiments, or may be arbitrarily combined with optional implementations of other embodiments.

The embodiments of the disclosure also provide devices for implementing any of the above methods. For example, a device is provided, including units or modules for implementing each step performed by the terminal in any of the above methods. As another example, another device is provided, including a unit or a module for implementing each step performed by a network device (such as an access network device, a core network function node, a core network device, or the like) in any of the above methods.

It should be understood that the division of the units or modules in the above device is only a division of logical functions, and in actual implementation, they may be fully or partially integrated into one physical entity, or they may be physically separated. In addition, the units or modules in the device may be implemented through the processor calling software. For example, the device includes a processor, the processor is connected to a memory having instructions stored therein, and the processor is configured to call the instructions stored in the memory to implement any of the above methods or implement the functions of the units or modules of the above apparatuses. The processor is, for example, a general-purpose processor, such as a central processing unit (CPU) or a microprocessor. The memory is inside the device or outside the device. In some examples, the units or modules in the device may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, so as to realize the functions of some or all of the above units or modules. All units or modules of the above devices may be implemented entirely through the processor calling software, entirely through hardware circuits, or partially through the processor calling software and partially through hardware circuits.

In the embodiments of the disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), or the like. In another implementation, the processor may implement certain functions through the logical relationship of hardware circuits, and the logical relationship of the above hardware circuits is fixed or reconfigurable, such as a hardware circuit implemented by a processor as an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU).

FIG. 7A is a structural diagram illustrating a first communication device according to an embodiment of the disclosure. As illustrated in FIG. 7A, the first communication device includes a transceiver module 7101. The transceiver module 7101 is configured to send a first information. The first information is configured to indicate whether the terminal supports a first capability, and the first capability is a capability of perform a positioning measurement on carriers while performing communication with network devices on carriers. For example, the above-mentioned transceiver module 7101 is configured to perform the steps related to the receiving and the sending performed by the terminal 101 in any of the above methods, which are not repeated here. For example, the first communication device also includes a processing module 7102. The above-mentioned processing module 7102 is configured to perform the steps related to the processing performed by the terminal 101 in any of the above methods, such as generation of a message, measurement, processing of a measurement result and other related steps, which are not repeated here.

FIG. 7B is a schematic diagram illustrating a structure of the first communication device according to an embodiment of the disclosure. As illustrated in FIG. 7B, the first communication device includes a transceiver module 7201. The transceiver module 7201 is configured to receive first information, the first information is configured to indicate whether the terminal supports a first capability, and the first capability is a capability of performing a positioning measurement on carriers while performing communication with network devices on carriers. For example, the above-mentioned transceiver module 7201 is configured to perform the steps related to the receiving and the sending performed by the network device 102 in any of the above methods, which are not repeated here. For example, the second communication device also includes a processing module 7202. The above-mentioned processing module 7202 is configured to perform the steps related to the processing performed by the network device 102 in any of the above methods, such as generation of a message, measurement, processing of a measurement result and other related steps, which are not repeated here.

FIG. 8A is a schematic diagram illustrating a structure of a communication device 8100 according to an embodiment of the disclosure. The communication device 8100 may be a network device (e.g., an access network device, a core network device or the like), a terminal (e.g., a user device or the like), a chip, chip system or processor that supports a network device to implement any of the above methods, or a chip, chip system or processor that supports a terminal to implement any of the above methods. The communication device 8100 may be configured to implement the methods described in the above method embodiments, and for details, reference may be made to the description in the above method embodiments.

As illustrated in FIG. 8A, the communication device 8100 may include one or more processors 8101. The processor 8101 may be a general-purpose processor or a dedicated processor, etc. For example, it may be a baseband processor or a central processing unit. The baseband processor may be used to process the communication protocol and communication data, while the central processing unit may be used to control the communication device (such as a base station, a baseband chip, a UE, a terminal, chip, a DU, a CU, or the like), execute a computer program, and process the data of the computer program. The processor 8101 is configured to call instructions to cause the communication device 8100 to perform any of the above methods.

In some embodiments, the communication device 8100 further includes one or more memories 8102 for storing instructions. For example, all or some of the memories 8102 may also be outside the communication device 8100.

In some embodiments, the communication device 8100 further includes one or more transceivers 8103. When the communication device 8100 includes one or more transceivers 8103, the communication steps such as sending and receiving in the above methods are performed by the transceivers 8103, and the other steps are performed by the processors 8101.

In some embodiments, the transceiver may include a receiver and a transmitter, and the receiver and the transmitter may be separate or integrated. For example, the terms such as "transceiver," "transceiver unit," transceiver machine," "transceiver circuit" and the like may be used interchangeably. Terms such as "transmitter," "transmission unit," "transmitter machine," "transmission circuit" and the like may be used interchangeably. Terms such as "receiver," "receiving unit," "receiver machine," "receiving circuit" and the like may be used interchangeably.

For example, the communication device 8100 further includes one or more interface circuits 8104, which are connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 according to the above embodiments may be a network device or a terminal, but the scope of the communication device 8100 according to the disclosure is not limited thereto, and the structure of the communication device 8100 may not be limited to FIG. 8A. The communication device may be an independent device or may be part of a larger device. For example, the communication device may be: 1) an independent integrated circuit (IC), a chip, or a chip system or subsystem; (2) a set of one or more ICs, and for example the IC set may also include a storage component for storing data and computer programs; (3) an ASIC, such as a modem; (4) a module that may be embedded in other devices; (5) a receiver, a UE, an intelligent UE, a cellular phone, a wireless device, a handheld device, a mobile unit, a vehicle-mounted device, a network device, a cloud device, an artificial intelligence device, or the like; (6) others.

FIG. 8B is a schematic diagram illustrating a structure of a chip 8200 according to an embodiment of the disclosure. In a case where the communication device 8100 may be a chip or a chip system, reference may be made to the schematic diagram of the structure of the chip 8200 illustrated in FIG. 8B, but the disclosure is not limited thereto. The chip 8200 includes one or more processors 8201, and the processor 8201 is configured to call instructions to enable the chip 8200 to perform any of the above methods.

In some embodiments, the chip 8200 further includes one or more interface circuits 8202, which are connected to the memory 8203. The interface circuit 8202 may be configured to receive signals from the memory 8203 or other devices, and the interface circuit 8202 may be configured to send signals to the memory 8203 or other devices. For example, the interface circuit 8202 may read the instructions stored in the memory 8203 and send the instructions to the processor 8201. For example, the terms such as "interface circuit," "interface," "transceiver pin," and "transceiver" may be used interchangeably.

In some embodiments, the chip 8200 further includes one or more memories 8203 for storing instructions. For example, all or part of the memories 8203 may be outside the chip 8200.

The disclosure also provides a storage medium, on which instructions are stored, and when the instructions are executed on the communication device 8100, the communication device 8100 performs any of the above methods. For example, the storage medium is an electronic storage medium. For example, the storage medium is, but is not limited to, a computer-readable storage medium, and it may also be a storage medium readable by other devices. For example, the storage medium may be, but is not limited to, a non-transitory storage medium, and it may also be a temporary storage medium.

The disclosure also provides a program product, and when the program product is executed by the communication device 8100, the communication device 8100 performs any one of the above methods. For example, the program product is a computer program product.

The disclosure also provides a computer program, which, when executed on a computer, enables the computer to perform any one of the above methods.

### Industrial Applicability

In the embodiments of the disclosure, the terminal may send the first information to report whether it supports the first capability, so that when there is a time conflict between the communication and the positioning measurement performed on carriers, processing adapted to the terminal capability may be performed based on the different capabilities of the terminals, thereby effectively resolving the time conflict problem between different operations.

## Claims

1. A communication method, performed by a terminal, the method comprising:
sending first information, wherein the first information is configured to indicate whether the terminal supports a first capability, and the first capability is a capability of performing a positioning measurement on a plurality of carriers while performing communication with a network device on a plurality of carriers.

2. The method of claim 1, further comprising:
performing the communication based on a first set of carriers and performing the positioning measurement based on a second set of carriers, wherein the terminal supports the first capability.

3. The method of claim 1, further comprising:
sending second information, wherein the terminal does not support the first capability, and the second information is configured to request third information, and
receiving the third information, wherein the third information is configured to indicate a measurement gap.

4. The method of claim 3, wherein the second information comprises at least one of:
a starting offset value of the measurement gap,
a measurement gap duration,
a measurement gap period, or
a measurement gap priority.

5. The method of claim 1, further comprising:
receiving third information, wherein the terminal does not support the first capability, and the third information is configured to indicate a measurement gap.

6. The method of claim 5, wherein the third information comprises at least one of:
a starting offset value of the measurement gap,
a measurement gap duration,
a measurement gap period, or
a measurement gap priority.

7. The method of any one of claims 3 to 6, further comprising:
performing the communication with the network device on a first set of carriers; and
performing the positioning measurement based on a second set of carriers in accordance with the measurement gap.

8. The method of claim 1, further comprising:
performing the communication and not performing the positioning measurement, wherein the terminal does not support the first capability, and a time when the communication is performed based on a first set of carriers conflicts with a time when the positioning measurement is performed based on a second set of carriers.

9. The method of any one of claims 2 to 8, wherein performing the communication based on the first set of carriers comprises at least one of:
receiving a first type of downlink information on the first set of carriers; or
sending a first type of uplink information on the first set of carriers.

10. The method of claim 9, wherein the first type of downlink information comprises at least one of:
a physical downlink control channel (PDCCH),
a physical downlink shared channel (PDSCH),
a synchronization signal block (SSB),
a channel state information reference signal (CSI-RS), or
a tracking reference signal (TRS).

11. The method of claim 9 or 10, wherein the first type of uplink information comprises at least one of:
a physical uplink control channel (PUCCH),
a physical uplink shared channel (PUSCH), or
a sounding reference signal (SRS).

12. The method of any one of claims 2 to 8, wherein performing the positioning measurement based on the second set of carriers comprises at least one of:
receiving a positioning reference signal (PRS) on the second set of carriers, wherein the PRS is used for the positioning measurement; and
sending a sounding reference signal (SRS) on the second set of carriers, wherein the SRS is used for the positioning measurement.

13. The method of any one of claims 2 to 8, wherein a frequency band relationship between the first set of carriers and the second set of carriers satisfies one of:
the first set of carriers and the second set of carriers forming intra-band carrier aggregation, or
the first set of carriers and the second set of carriers forming inter-band carrier aggregation.

14. The method of claim 13, wherein
the first set of carriers comprises carriers belonging to the same frequency band or comprises carriers belonging to different frequency bands;
the second set of carriers comprises carriers belonging to the same frequency band or comprises carriers belonging to different frequency bands.

15. The method of claim 13 or 14, wherein
all or part of carriers in the first set are in the same frequency band as all or part of carriers in the second set.

16. A communication method, performed by a network device, the method comprising:
receiving first information, wherein the first information is configured to indicate whether a terminal supports a first capability, and the first capability is a capability of performing a positioning measurement on a plurality of carriers while performing communication with the network device on a plurality of carriers.

17. The method of claim 16, further comprising:
performing the communication based on a first set of carriers and performing the positioning measurement based on a second set of carriers, wherein the terminal supports the first capability.

18. The method of claim 16, further comprising:
receiving second information, wherein the terminal does not support the first capability, and the second information is configured to request third information; and
sending the third information, wherein the third information is configured to indicate a measurement gap.

19. The method of claim 18, wherein the second information comprises at least one of:
a starting offset value of the measurement gap,
a measurement gap duration,
a measurement gap period, or
a measurement gap period.

20. The method of claim 16, further comprising:
sending third information, wherein the terminal does not support the first capability, and the third information is configured to indicate a measurement gap.

21. The method of claim 20, wherein the third information comprises at least one of:
a starting offset value of the measurement gap,
a measurement gap duration,
a measurement gap period, or
a measurement gap period.

22. The method of claim 16, further comprising:
performing the communication and not performing the positioning measurement, wherein the terminal does not support the first capability, and a time when the communication is performed based on a first set of carriers conflicts with a time when the positioning measurement is performed based on a second set of carriers.

23. The method of any one of claims 17 to 22, wherein performing the communication based on the first set of carriers comprises at least one of:
sending a first type of downlink information on the first set of carriers; or
receiving a first type of uplink information on the first set of carriers.

24. The method of claim 23, wherein the first type of downlink information comprises at least one of:
a physical downlink control channel (PDCCH),
a physical downlink shared channel (PDSCH),
a synchronization signal block (SSB),
a channel state information reference signal (CSI-RS), or
a tracking reference signal (TRS).

25. The method of claim 23 or 24, wherein the first type of uplink information comprises at least one of:
a physical uplink control channel (PUCCH),
a physical uplink shared channel (PUSCH), or
a sounding reference signal (SRS).

26. The method of any one of claims 17 to 22, wherein performing the positioning measurement based on the second set of carriers comprises at least one of:
sending a positioning reference signal (PRS) on the second set of carriers, wherein the PRS is used for the positioning measurement; and
receiving a sounding reference signal (SRS) on the second set of carriers, wherein the SRS is used for the positioning measurement.

27. The method of any one of claims 17 to 22, wherein a frequency band relationship between the first set of carriers and the second set of carriers satisfies one of:
the first set of carriers and the second set of carriers forming intra-band carrier aggregation; or
the first set of carriers and the second set of carriers forming inter-band carrier aggregation.

28. The method of any one of claims 17 to 22, wherein
the first set of carriers comprises carriers belonging to the same frequency band or comprises carriers belonging to different frequency bands;
the second set of carriers comprises carriers belonging to the same frequency band or comprises carriers belonging to different frequency bands.

29. The method of claim 27 or 28, wherein
all or part of carriers in the first set are in the same frequency band as all or part of carriers in the second set.

30. A communication method, performed by a communication system, the method comprising:
sending first information by a terminal to a network device, wherein the first information is configured to indicate whether the terminal supports a first capability, and the first capability is a capability of performing a positioning measurement on a plurality of carriers while performing communication with the network device on a plurality of carriers; and
receiving the first information by the network device.

31. A first communication device, comprising:
a transceiver module, configured to send first information, wherein the first information is configured to indicate whether a terminal supports a first capability, and the first capability is a capability of performing a positioning measurement on a plurality of carriers while performing communication with a network device on a plurality of carriers.

32. A second communication device, comprising:
a transceiver module, configured to receive first information, wherein the first information is configured to indicate whether a terminal supports a first capability, and the first capability is a capability of performing a positioning measurement on a plurality of carriers while performing communication with a network device on a plurality of carriers.

33. A communication device, comprising:
one or more processors; and
a memory;
wherein the memory is configured to store a computer program, and
the processor is configured to execute the computer program to implement the method of any one of claims 1 to 15, the method of any one of claims 16 to 29, or the method of claim 30.

34. A communication system, comprising a terminal and a network device, wherein
the terminal is configured to implement the method of any one of claims 1 to 15; and
the network device is configured to implement the method of any one of claims 16 to 24.

35. A computer-readable storage medium, having instructions stored therein, which, when called and executed on a computer, causes the computer to implement the method of any one of claims 1 to 15, the method of any one of claims 16 to 29, or the method of claim 30.
